# EUROPEAN PATENT SPECIFICATION

(11) **EP 3 006 995 B1**
(45) Date of publication and mention of the grant of the patent: **28.08.2019**
(21) Application number: 15187584.6
(22) Date of filing: 30.09.2015
(51) Int. Cl.: G02F 1/1335, G02B 5/02, F21V 8/00

(54) **TRANSPARENT DISPLAY APPARATUS**
TRANSPARENTE ANZEIGEVORRICHTUNG
APPAREIL D'AFFICHAGE TRANSPARENT

(30) Priority: 07.10.2014 KR 20140134804
(43) Date of publication of application: 13.04.2016
(73) Proprietor: Samsung Electronics Co., Ltd., Gyeonggi-do 16677 (KR)
(72) Inventor: SOHN, Sang Hyun, Gyeonggi-do (KR); MIN, Kwan Sik, Gyeonggi-do (KR); JEON, Keun-Bae, Gyeonggi-do (KR)
(74) Representative: Walaski, Jan Filip

(56) References cited:
- US-A1- 2002 180 910
- US-A1- 2006 262 569
- US-A1- 2011 063 542

## Description

The present invention relates to a transparent display apparatus capable of displaying auto-stereoscopic images.

A display apparatus is equipment for displaying images. Lately, there has been an increase in research in the field of transparent displays, stereoscopic displays, etc..

A transparent display is fabricated with transparent electronic devices so that a user can view the opposite side of the transparent display as necessary. The transparent display can be implemented as a Liquid Crystal Display (LCD). A stereoscopic display displays stereoscopic images using a user's binocular disparity, and can be classified into a stereoscopic type and an auto-stereoscopic type. The stereoscopic type display requires a user to wear glasses, such as polarizing glasses, for seeing three-dimensional images, and the auto-stereoscopic type display enables a user to view three-dimensional images with his/her naked eyes by using a device such as a lenticular lens, a parallax barrier, parallax illumination, etc.

An LCD-type transparent display needs a back light source such as a Back Light Unit (BLU), although it can separate a liquid crystal panel from the BLU. Recently, the LCD-type transparent display is commercialized in a showcase, a refrigerator, etc. that can easily form a light source. However, the stereoscopic type display may degrade transmittance due to glasses, and the auto-stereoscopic type display may cause image distortion or transmittance degradation due to barriers.

D1 (US 2006/262569 A1) relates to a light guide apparatus including a reflecting polarizing surface and a light reflecting surface having at least one prism pattern thereon.

D2 (US 2011/063542 A1) discloses a transparent display device adapted to selectively drive an LCD panel in transparent and opaque mode.

D3 (US 2002/180910 A1) discloses a reflective liquid crystal display device.

According to an aspect of the current invention, there is provided a transparent display apparatus according to claims 1 and 8.

Therefore, it is an aspect of the present disclosure to provide a transparent display apparatus in which a plurality of micro-patterns are formed on a reflection surface of a transparent light guide plate.

Also, it is another aspect of the present disclosure to provide a transparent display apparatus in which a plurality of pattern groups each including a plurality of micro-patterns are formed on a reflection surface of a transparent light guide plate to display autostereoscopic images.

Additional aspects of the disclosure will be set forth in part in the description which follows and, in part, will be obvious from the description, or may be learned by practice of the disclosure.

According to an aspect of an exemplary embodiment, a transparent display apparatus includes a light source configured to generate light, a transparent light guide plate configured to change a path of the generated light, and to emit the light, a first polarizing plate configured to transmit first polarized light from the light emitted from the transparent light guide plate, a liquid crystal panel configured to change a phase of the first polarized light based on driving of liquid crystals, and a second polarizing plate configured to adjust an amount of the first polarized light based on the changed phase of the first polarized light, wherein the transparent light guide plate includes an incident surface on which the light is incident, an exit surface from which the incident light exits, a reflection surface situated opposite to the exit surface and a plurality of micro-patterns, formed on the reflection surface, configured to diffuse the incident light.

According to another exemplary embodiment, the plurality of micro-patterns are formed uniformly on the reflection surface.

According to another exemplary embodiment, the plurality of micro-patterns are formed discontinuously on the reflection surface.

According to another exemplary embodiment, the plurality of micro-patterns are densely formed in a center area of the reflection surface, and sparsely formed in areas of the reflection surface closer to the incident surface.

According to another exemplary embodiment, the plurality of micro-patterns form a plurality of pattern groups.

According to another exemplary embodiment, the plurality of pattern groups are spaced at regular intervals.

According to another exemplary embodiment, the plurality of pattern groups are divided into a plurality of sub pattern groups based on distances to the incident surface.

According to another exemplary embodiment, the plurality of micro-patterns are arranged at different intervals according to sub pattern groups to which the plurality of micro-patterns belong.

According to another exemplary embodiment, if a sub pattern group to which a part of the plurality of micro-patterns belongs is located at the longer distance to the incident surface, the part of the plurality of micro-patterns is arranged at narrower intervals.

According to another exemplary embodiment, the plurality of micro-patterns have different widths according to sub pattern groups to which the plurality of micro-patterns belong.

According to another exemplary embodiment, if a sub pattern group to which a part of the plurality of micro-patterns belongs is located at the longer distance to the incident surface, the part of the plurality of micro-patterns has the longer width.

According to another exemplary embodiment, the plurality of pattern groups are inclined at a predetermined angle with respect to the incident surface.

According to another exemplary embodiment, the plurality of micro-patterns extend in a direction in which the incident surface extends.

According to another exemplary embodiment, the plurality of micro-patterns are formed in at least one pattern from among a triangular-prism pattern, a round-prism pattern, and a lenticular pattern.

According to an aspect of another exemplary embodiment, a transparent display apparatus includes a light source configured to generate light, a first polarizing plate configured to transmit first polarized light from the light generated by the light source, a transparent light guide plate configured to change a path of the first polarized light, and to emit the light, a liquid crystal panel configured to change a phase of the first polarized light based on driving of liquid crystals and a second polarizing plate configured to adjust an amount of the first polarized light based on the changed phase of the first polarized light, wherein the transparent light guide plate includes an incident surface on which the light is incident, an exit surface from which the incident light exits, a reflection surface situated opposite to the exit surface and a plurality of micro-patterns, formed on the reflection surface, configured to diffuse the incident light.

According to another exemplary embodiment, the plurality of micro-patterns are formed uniformly on the reflection surface.

According to another exemplary embodiment, the plurality of micro-patterns are formed discontinuously on the reflection surface.

According to another exemplary embodiment, the plurality of micro-patterns are densely formed in a center area of the reflection surface, and sparsely formed in areas of the reflection surface closer to the incident surface.

According to another exemplary embodiment, the plurality of micro-patterns form a plurality of pattern groups.

According to another exemplary embodiment, the plurality of pattern groups are formed discontinuously at regular intervals.

According to another exemplary embodiment, the plurality of pattern groups are divided into a plurality of sub pattern groups based on distances to the incident surface.

According to another exemplary embodiment, the plurality of micro-patterns are arranged at different intervals according to sub pattern groups to which the plurality of micro-patterns belong.

According to another exemplary embodiment, if a sub pattern group to which a part of the plurality of micro-patterns belongs is located at the longer distance to the incident surface, the part of the plurality of micro-patterns is arranged at narrower intervals.

According to another exemplary embodiment, the plurality of micro-patterns have different widths according to sub pattern groups to which the plurality of micro-patterns belong.

According to another exemplary embodiment, if a sub pattern group to which a part of the plurality of micro-patterns belongs is located at the longer distance to the incident surface, the part of the plurality of micro-patterns has the longer width.

According to another exemplary embodiment, the plurality of pattern groups are inclined at a predetermined angle with respect to the incident surface.

According to another exemplary embodiment, the plurality of micro-patterns extend in a direction in which the incident surface extends.

According to another exemplary embodiment, the plurality of micro-patterns are formed in at least one pattern from among a triangular-prism pattern, a round-prism pattern, and a lenticular pattern.

According to another aspect of an exemplary embodiment, a transparent display apparatus includes a light source configured to generate light, and a transparent light guide plate configured to change a path of the generated light, and to emit the light, wherein the transparent light guide plate includes an incident surface on which the light is incident, an exit surface from which the incident light exits and a reflection surface situated opposite to the exit surface and comprising a plurality of micro-patterns.

According to another exemplary embodiment, the plurality of micro-patterns, formed on the reflection surface, are configured to diffuse the incident light.

These and/or other aspects of the disclosure will become apparent and more readily appreciated from the following description of the embodiments, taken in conjunction with the accompanying drawings in which:
FIG. 1 shows a showcase including a transparent display apparatus according to an exemplary embodiment of the present disclosure;
FIG. 2 depicts an exploded perspective view showing a configuration of a transparent display apparatus according to an exemplary embodiment of the present disclosure;
FIG. 3 is an enlarged perspective view of a transparent light guide plate in the transparent display apparatus of FIG. 2, according to an exemplary embodiment;
FIG. 4 shows an example of micro-patterns formed on a reflection surface of the transparent light guide plate of FIG. 3, according to an exemplary embodiment;
FIG. 5 shows a section of a micro-pattern according to an exemplary embodiment of the present disclosure;
FIG. 6 shows a section of a micro-pattern according to another exemplary embodiment of the present disclosure;
FIG. 7 shows a section of a micro-pattern according to yet another exemplary embodiment of the present disclosure;
FIG. 8 depicts a view for describing an operation principle of a transparent display apparatus according to an exemplary embodiment of the present disclosure;
FIG. 9 depicts an exploded perspective view showing a configuration of a transparent display apparatus capable of displaying stereoscopic images, according to another exemplary embodiment of the present disclosure;
FIG. 10 depicts an enlarged perspective view of a transparent light guide plate in the transparent display apparatus of FIG. 9, according to an exemplary embodiment;
FIG. 11 depicts an enlarged view of a reflection surface in the transparent light guide plate of FIG. 10, according to an exemplary embodiment;
FIGS. 12, 13, and 14 show examples of main patterns formed on reflection surfaces of transparent light guide plates, according to exemplary embodiments;
FIGS. 15, 16, and 17 show other examples of main patterns formed on reflection surfaces of transparent light guide plates, according to exemplary embodiments;
FIG. 18 depicts a view for describing an operation principle of a transparent display apparatus capable of displaying stereoscopic images, according to another exemplary embodiment of the present disclosure;
FIG. 19 depicts an exploded perspective view showing a configuration of a transparent display apparatus according to another exemplary embodiment of the present disclosure;
FIG. 20 depicts a view for describing an operation principle of a transparent display apparatus according to another exemplary embodiment of the present disclosure;
FIG. 21 depicts an exploded perspective view showing a configuration of a transparent display apparatus capable of displaying stereoscopic images, according to another exemplary embodiment of the present disclosure;
FIG. 22 depicts a view for describing an operation principle of a transparent display apparatus according to another exemplary embodiment of the present disclosure;
FIG. 23 depicts an exploded perspective view showing a configuration of a transparent display apparatus according to another exemplary embodiment of the present disclosure;
FIGS. 24 and 25 depict views for describing an operation principle of a transparent display apparatus according to another exemplary embodiment of the present disclosure;
FIG. 26 depicts an exploded perspective view showing a configuration of a transparent display apparatus according to another exemplary embodiment of the present disclosure; and
FIGS. 27 and 28 depict views for describing an operation principle of a transparent display apparatus according to another exemplary embodiment of the present disclosure.

Hereinafter, a transparent display apparatus will be described in detail with reference to the accompanying drawings.

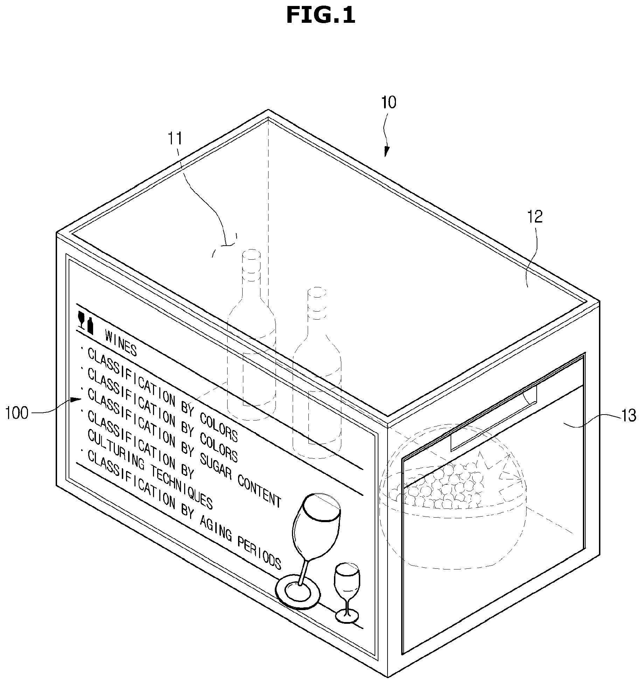

As shown in FIG. 1, the showcase 10 may include a case 12 having storage space 11, a door 13 provided at one side of the case 12, and the transparent display apparatus 100 disposed at the front part of the case 12.

In the storage space 11, goods may be placed and displayed. In FIG. 1, an example in which wines are displayed is shown.

On the transparent display apparatus 100, information about the displayed goods may be displayed in conjunction with the goods displayed in the storage space 11. The information about the goods displayed on the transparent display apparatus 100 excites a consumer's curiosity, which may lead to an effective exhibition effect, according to an exemplary embodiment.

According to exemplary embodiments, the case 12 may include a sound output unit to output sound. The sound output unit may output descriptions about goods or background music.

The showcase 10 shown in FIG. 1 is an application example of the transparent display apparatus 100, and the transparent display apparatus 100 may be applied in various other forms, such as a smart window, a billboard advertising, etc.

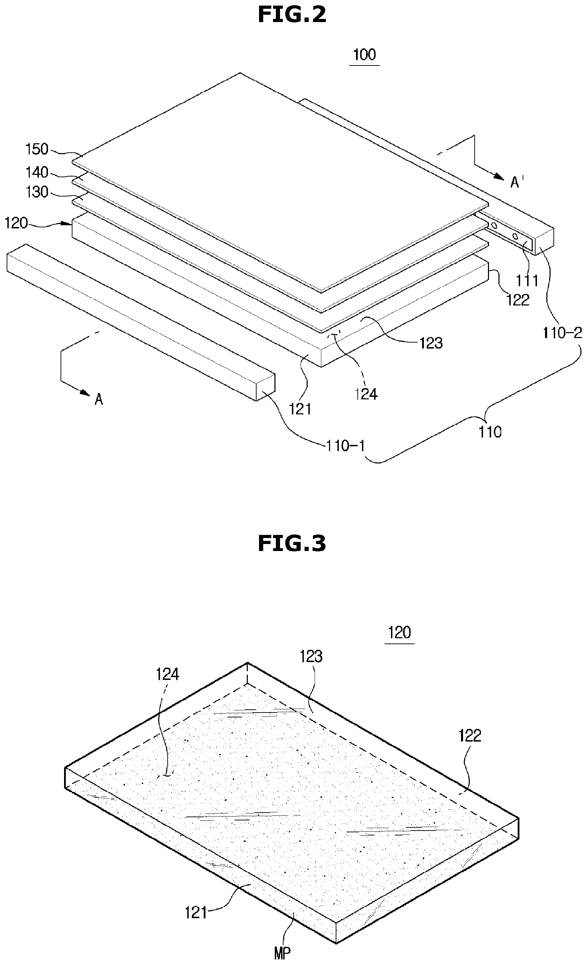

Hereinafter, a configuration of the transparent display apparatus 100 according to an exemplary embodiment of the present disclosure will be described in detail with reference to FIG. 2. Referring to FIG. 2, the transparent display apparatus 100, according to an exemplary embodiment of the present disclosure, may include one or more light sources 110 to generate light, a transparent light guide plate 120 to change a path of light to emit the light, a first polarizing plate 130 to transmit first polarized light of light emitted from the transparent light guide plate 120, a liquid crystal panel 140 to change a phase of the first polarized light according to driving of liquid crystals, and a second polarizing plate 150 to adjust an amount of the first polarized light according to the changed phase of the first polarized light.

The light sources 110 may include a first light source 110-1 and a second light source 110-2. The first and second light sources 110-1 and 110-2 may be arranged in the form of an array of point light sources along both sides of the transparent light guide plate 120, and light generated by the individual light sources 110-1 and 110-2 may be incident to the inside of the transparent light guide plate 120 from the lateral sides of the transparent light guide plate 120. Each light source 110 may be a Cold Cathode Fluorescent Lamp (CCFL), an External Electrode Fluorescent Lamp (EEFL), or a Light Emitting Diode (LED), although it is not limited to these.

Each light source 110 may further include a light source cover 111 having an opening at one side. The light source cover 111 may reflect light generated by the array of point light sources out of the opening, and as a result, the light generated by the array of point light sources may be transferred to the transparent light guide plate 120 through the opening of the light source cover 111.

The transparent light guide plate 120 may be in the shape of a rectangular plate. The transparent light guide plate 120 may include a first incident surface 121 and a second incident surface 122 onto which light is incident, an exit surface 123 to connect the first incident surface 121 to the second incident surface 122 and to emit light, a reflection surface 124 to connect the first incident surface 121 to the second incident surface 122 and being opposite to the exit surface 123, and micro-patterns MP formed on the reflection surface 124 to diffuse incident light.

The first incident surface 121 and the second incident surface 122 may be defined as lateral surfaces of the transparent light guide plate 120. The first incident surface 121 and the second incident surface 122 may be disposed adjacent to the first light source 110-1 and the second light source 110-2, respectively, so that light generated by the first and second light sources 110-1 and 110-2 can be incident to the transparent light guide plate 120. In FIG. 2, an example in which the transparent light guide plate 120 includes two incident surfaces 121 and 122 is shown, however, this is merely an example and the transparent light guide plate 120 may include one incident surface, or three incident surfaces or more.

On the reflection surface 124 a plurality of micro-patterns MP may be formed. The micro-patterns MP, which are invisible fine patterns, may be formed discontinuously on the reflection surface 124, and function as a diffuser or a prism sheet included in a display apparatus, according to the related art.

The diffuser of the display apparatus, according to the related art, may be disposed in front of a light guide plate in order to diffuse light exiting the light guide plate, and the prism sheet of the display apparatus, according to the related art, may be disposed in front of the diffuser in order to improve the brightness of the display apparatus. That is, the diffuser and the prism sheet may be installed as components for improving optical characteristics of the display apparatus. However, since the components are opaque, it is difficult to implement a transparent display apparatus using such opaque components.

The transparent display apparatus 100, according to an aspect of the present disclosure, does not require a configuration such as a diffuser or a prism sheet by changing an arrangement or shape of the micro-patterns MP formed on the reflection surface 124. Hereinafter, the transparent light guide plate 120 and the micro-patterns MP will be described in more detail.

FIG. 3 depicts an enlarged perspective view of the transparent light guide plate 120 in the transparent display apparatus 100 of FIG. 2, according to an exemplary embodiment.

Referring to FIG. 3, the micro-patterns MP may be formed by cutting grooves on the reflection surface 120, and may incorporate opaque patterns. However, the micro-patterns MP may have very small sizes that cannot be easily recognized by a human's eyes, and accordingly, the micro-patterns MP may be invisible. According to an exemplary embodiment, the sizes of the micro-patterns MP may be within a range from 10 micrometers to 100 micrometers. As such, since the opaque micro-patterns MP cannot be recognized by a human's eyes, the light guide plate 120 can be recognized as a transparent light guide plate, and as a result, transparent images can be displayed on the transparent display apparatus 100. However, the sizes of the micro-patterns MP are not limited to be within the range from 10 micrometers to 100 micrometers, and may be within another range as long as the light guide plate 120 can be recognized to be transparent.

According to exemplary embodiments, the micro-patterns MP may be formed uniformly or with different densities on the reflection surface 124. If the micro-patterns MP are formed uniformly on the reflection surface 124, light incident to the micro-patterns MP and then emitted from the exit surface 123 may have lower brightness at a longer distance to the first incident surface 121 or the second incident surface 122.

More specifically, light incident to the inside of the transparent light guide plate 120 from the light sources 110 may travel toward the center area of the transparent light guide plate 120 through the first incident surface 121 or the second incident surface 122. At this time, a major part of the light may be diffused by the micro-patterns MP formed adjacent to the first incident surface 121 or the second incident surface 122. Accordingly, a larger amount of incident light may exit the front part of the transparent light guide plate 120 around the first incident surface 121 or the second incident surface 122 than around the center area of the transparent light guide plate 120, which may lead to an unbalanced emission of light between the edge area and the center area of the exit surface 123.

In order to prevent this problem, the densities of the micro-patterns MP that are formed on the reflection surface 124 may be adjusted. By adjusting the densities of the micro-patterns MP, it is possible to increase an amount of light that arrives at the center area of the exit surface 123. Herein, the density of micro-patterns MP means an occupancy rate of the micro-patterns MP with respect to a predetermined area of the reflection surface 124.

According to an exemplary embodiment, micro-patterns MP may be densely formed in the center area of the reflection surface 124, and more sparsely formed in areas of the reflection surface 124 closer to the first incident surface 121 or the second incident surface 122.

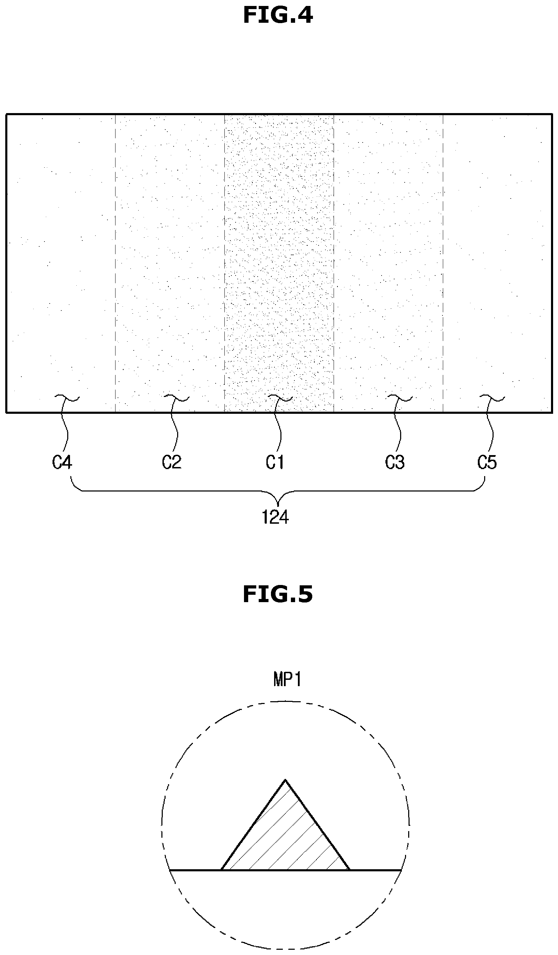

FIG. 4 shows an example of micro-patterns MP formed on the reflection surface 124 of the transparent light guide plate 120 of FIG. 3, according to an exemplary embodiment. Referring to FIG. 4, the micro-patterns MP may be formed with a highest density in a center area C1 of the reflection surface 124, with a medium density in an area C2 between the center area C1 of the reflection surface 124 and the first incident surface 121 or an area C3 between the center area C1 of the reflection surface 124 and the second incident surface 122, and with a lowest density in an area C4 adjacent to the first incident surface 121 or an area C5 adjacent to the second incident surface 122, as shown in FIG. 4. In FIG. 4, an example in which the reflection surface 124 is divided into five areas is shown, however, this is merely an example and the reflection surface 124 may be divided into three, four, six or more areas, according to exemplary embodiments.

Hereinafter, the shape of the micro-patterns MP will be described in detail.

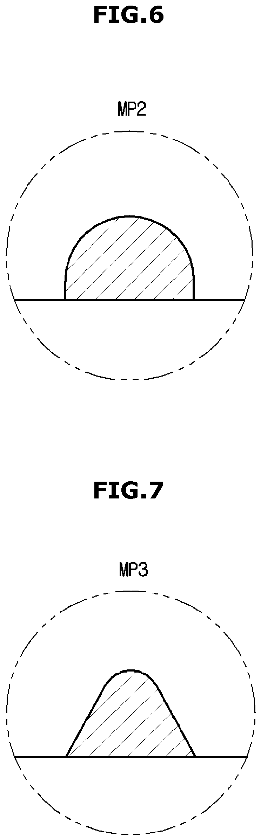

FIG. 5 shows a section of a micro-pattern according to an exemplary embodiment of the present disclosure, FIG. 6 shows a section of a micro-pattern according to another exemplary embodiment of the present disclosure, and FIG. 7 shows a section of a micro-pattern according to yet another exemplary embodiment of the present disclosure.

Referring to FIG. 5, a micro-pattern MP1 according to an exemplary embodiment of the present disclosure may have a triangular-prism pattern. Herein, the triangular-prism pattern may mean a pattern having a triangular section. In the triangular-prism pattern, the brightness of light may depend on the inclination angle of the triangle of the section.

For example, if the inclination angle of the triangle is small, that is, if the inclination of the triangle is steep, the brightness of light may increase since light cannot be widely diffused. In contrast, if the inclination angle of the triangle is great, that is, if the inclination of the triangle is gradual, the brightness of light may decrease since light can be widely diffused. Accordingly, the shape of the micro-pattern MP1 may be changed depending on purposes.

Referring to FIG. 6, a micro-pattern MP2 according to another exemplary embodiment of the present disclosure may have a lenticular pattern. The lenticular pattern may mean a pattern having a section of a semicircle or a semiellipse.

Referring to FIG. 7, a micro-pattern MP3 according to yet another embodiment of the present disclosure may be a round-prism pattern. The round-prism pattern may mean a pattern having a section of a triangle whose top vertex is in the shape of an arc.

Since the lenticular pattern or the round-prism pattern has a curved section, the lenticular pattern or the round-prism pattern may reflect light in different directions depending on locations at which the light is incident on the pattern. Accordingly, the lenticular pattern or the round-prism pattern can diffuse light over a wide area.

However, the micro-patterns MP1, MP2, and MP3 shown in FIGS. 5, 6, and 7 are only exemplary, and the shapes of micro-patterns MP are not limited to the micro-patterns MP1, MP2, and MP3. That is, the micro-patterns MP may be implemented in various shapes as long as they can diffuse light.

The liquid crystal panel 140 may display an image using light exiting the transparent light guide plate 120. More specifically, the liquid crystal panel 140 may convert first polarized light exiting the transparent light guide plate 120 and then transmitted through the first polarizing plate 130 to thereby display an image.

The liquid crystal panel 140 may include an upper substrate, a lower substrate, and a liquid crystal layer interposed between the upper substrate and the lower substrate. The upper substrate and the lower substrate may be made of glass or a transparent plastic material. One of the upper substrate and the lower substrate may include a plurality of thin film transistors (TFTs) arranged in a matrix form, and the other one may include a plurality of common electrodes made of Indium Tin Oxide (ITO) or Indium Zinc Oxide (IZO) .

Liquid crystal molecules constituting the liquid crystal layer may be positive liquid crystals. The positive liquid crystals have such a property that a dielectric constant in a long axis direction is larger than that in a short axis direction, and the liquid crystals may be in a pre-tilted state.

So far, the configuration of the transparent display apparatus 100, according to an exemplary embodiment of the present disclosure, has been described. Hereinafter, an operation principle of the transparent display apparatus 100 will be described in detail.

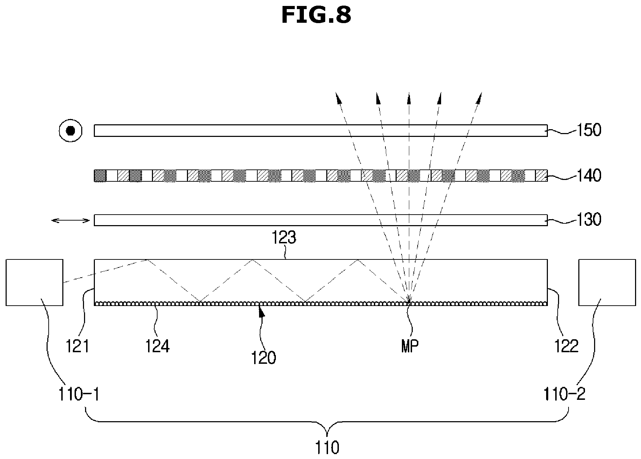

FIG. 8 depicts a view for describing an operation principle of the transparent display apparatus 100 according to an exemplary embodiment of the present disclosure. In FIG. 8, for convenience of description, a section of the transparent display apparatus 100 cut in an A-A' direction of FIG. 2 is shown.

As shown in FIG. 8, light generated by the light sources 110 may be incident to the incident surfaces 121 and 122 of the transparent light guide plate 120. The light generated by the light sources 110 may be visible light, and may include first polarized light and second polarized light. In FIG. 8, an example in which light generated by two light sources 110 including the first light source 110-1 and the second light source 110-2 is incident to the first incident surface 121 and the second incident surface 122 is shown, however, light may be incident in different manners.

The incident light may be totally reflected from the reflection surface 124 and the exit surface 123 to travel in a direction away from the first incident surface 121 or the second incident surface 122, that is, toward the center area of the transparent light guide plate 120.

The light traveling toward the center area of the transparent light guide plate 120 may be diffused at the micro-patterns MP formed on the reflection surface 124, and the diffused light may be emitted forward through the exit surface 123 of the transparent light guide plate 120. If the micro-patterns MP are formed uniformly throughout the reflection surface 124, the reflection surface 124 on which the micro-patterns MP are formed may function as a surface light source. Likewise, when the micro-patterns MP are formed with different densities with respect to the center area of the reflection surface 124, the reflection surface 124 may function as a surface light source since the micro-patterns MP are formed throughout the reflection surface 124.

The light emitted forward may pass through the first polarizing plate 130 to be polarized in a first polarization direction. The light (referred to as first polarized light) polarized by the first polarizing plate 130 may be incident to the liquid crystal panel 140 disposed in front of the first polarizing plate 130 so that a phase difference is generated in the first polarized light according to driving of liquid crystals included in the liquid crystal panel 140. If a phase difference is generated in the first polarized light, an amount of light that is transmitted through the second polarizing plate 150 may vary according to a degree of change in the phase difference so that a gray scale can be represented.

So far, the transparent display apparatus 100, according to an exemplary embodiment of the present disclosure, has been described. Hereinafter, a transparent display apparatus 100a according to another exemplary embodiment of the present disclosure will be described.

The transparent display apparatus 100a, according to another exemplary embodiment of the present disclosure, can display stereoscopic images, while displaying transparent images. The stereoscopic images can be recognized without wearing three-dimensional (3D) glasses.

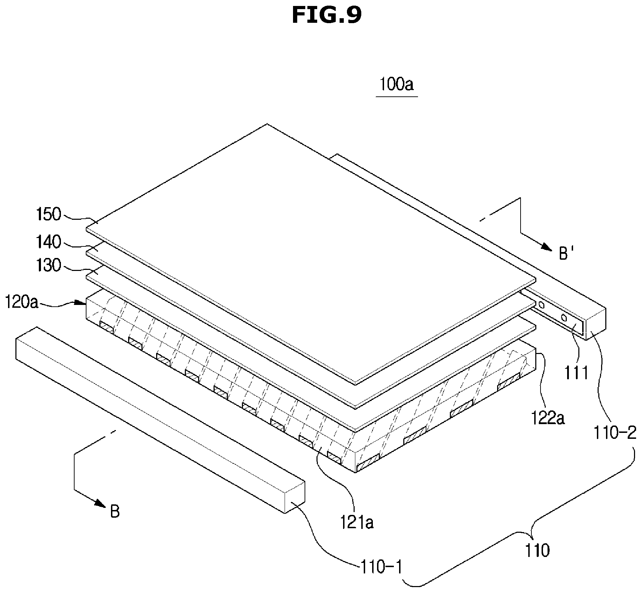

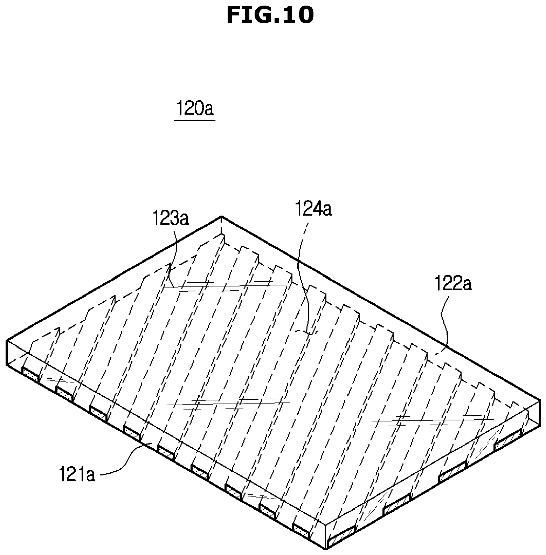

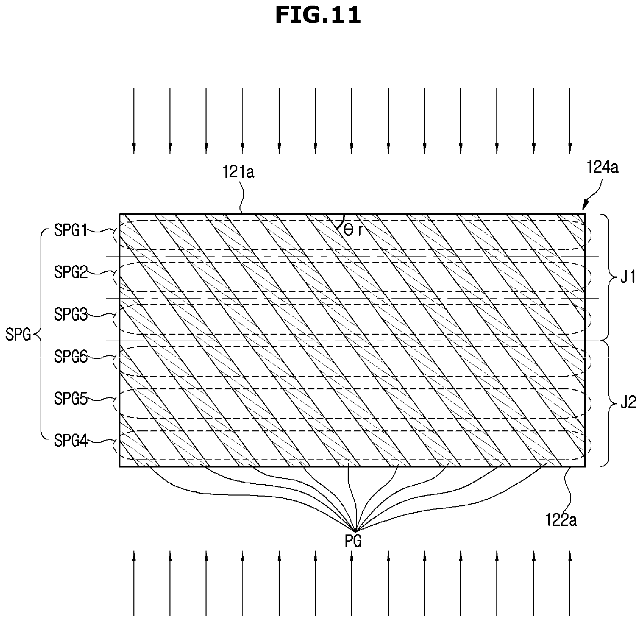

FIG. 9 depicts an exploded perspective view showing a configuration of the transparent display apparatus 100a capable of displaying stereoscopic images, according to another exemplary embodiment of the present disclosure, FIG. 10 depicts an enlarged perspective view of a transparent light guide plate 120a of the transparent display apparatus 100a of FIG. 9, according to an exemplary embodiment, and FIG. 11 depicts an enlarged view of a reflection surface 124a of the transparent light guide plate 120a of FIG. 10, according to an exemplary embodiment.

Referring to FIG. 9, the transparent display apparatus 100a according to another embodiment of the present disclosure may include one or more light sources 110 to generate light, a transparent light guide plate 120a to change a path of light generated by the light sources 110 to emit the light, a first polarizing plate 130 to transmit first polarized light of the light exiting the transparent light guide plate 120a, a liquid crystal panel 140 to change a phase of the first polarized light according to driving of liquid crystals, and a second polarizing plate 150 to adjust the amount of the first polarized light according to the changed phase of the first polarized light. The light sources 110, the first polarizing plate 130, the liquid crystal panel 140, and the second polarizing plate 150 may be the same components as the corresponding ones described above with reference to FIG. 2, and accordingly, in the following description, differences between the transparent display apparatus 100a and the transparent display apparatus 100 shown in FIG. 2 will be described.

The transparent display apparatus 100a according to another exemplary embodiment of the present disclosure may be different from the transparent display apparatus 100 of FIG. 2 in that the transparent display apparatus 100a can display auto-stereoscopic images. The auto-stereoscopic images may be displayed by adjusting an arrangement of micro-patterns MP formed on the reflection surface 124a of the transparent light guide plate 120a.

The transparent light guide plate 120a may be in the shape of a rectangular plate, and may include a first incident surface 121a, a second incident surface 122a, an exit surface 123a, and a reflection surface 124a, as described above with reference to FIG. 2. On the reflection surface 124a a plurality of micro-patterns MP may be formed. The micro-patterns MP may be grouped into a plurality of pattern groups PG.

As shown in FIGS. 10 and 11, the plurality of pattern groups PG into which the plurality of micro-patterns MP are grouped may be formed on the reflection surface 124a. The plurality of pattern groups PG may be spaced at regular intervals, and each pattern group PG may be formed in the shape of a long rod to function as a linear light source.

In order to display auto-stereoscopic images on the liquid crystal panel 140, the plurality of pattern groups PG need to be spaced at regular intervals. Since light incident to the transparent light guide plate 120a is emitted only from areas at which the plurality of pattern groups PG are formed, an image with binocular disparity can be displayed on the liquid crystal panel 140. Each pattern group PG may function as an opening of a parallax barrier.

The plurality of pattern groups PG may be inclined at a predetermined angle θr with respect to the first incident surface 121a or the second incident surface 122a. In FIGS. 10 and 11, an example in which each pattern group PG is inclined at an angle θr of 45 degrees or more with respect to the first incident surface 121a is shown. However, the angle θr between the pattern groups PG and the first incident surface 121a is not limited to 45 degrees, and may be any other angle between o degree and 90 degrees.

Meanwhile, if the plurality of pattern groups PG are formed with this arrangement, light exiting the exit surface 123a may have lower brightness at a farther distance from the first incident surface 121a or the second incident surface 122a. Since the light incident to the transparent light guide plate 120a travels toward the center area of the transparent light guide plate 120a from the first incident surface 121a or the second incident surface 122a, more light diffusion may occur by the pattern groups PG adjacent to the first incident surface 121a or the second incident surface 122a than by the pattern groups PG formed around the center area of the transparent light guide plate 120a. Accordingly, a larger amount of light may be emitted at areas closer to the first incident surface 121a or the second incident surface 122a, such that an amount of light arriving at the center area of the exit surface 123a may be significantly reduced.

In order to overcome this problem, the densities of the plurality of pattern groups PG may be adjusted. Herein, the densities of the plurality of pattern groups PG may mean occupancy rates of the pattern groups PG with respect to a predetermined area of the reflection surface 124a. More specifically, the densities of the plurality of pattern groups PG means occupancy rates of micro-patterns MP that are included in the pattern groups PG. Since light incident to the transparent light guide plate 120a is diffused by the micro-patterns MP in the pattern groups PG, a degree of light diffusion may be adjusted by adjusting the densities of the pattern groups PG.

According to an example, the pattern groups PG may be formed with different densities based on the distances to the first incident surface 121a or the second incident surface 122a of the transparent light guide plate 120a. According to exemplary embodiments, even when the transparent light guide plate 120a further includes another incident surface, the pattern groups PG may be formed with different densities based on the distances to the incident surface.

For example, as shown in FIG. 11, pattern groups PG belonging to an area J1 may be formed with predetermined densities based on the distances to the first incident surface 121a, and pattern groups PG belonging to an area J2 may be formed with other predetermined densities based on the distances to the second incident surface 122a.

As shown in FIG. 11, the pattern groups PG belonging to the area J1 among the plurality of pattern groups PG may be divided into a plurality of sub pattern groups according to distances to the first incident surface 121a. For example, the pattern groups PG belonging to the area J1 may be divided into a first sub pattern group SPG1 located closest to the first incident surface 121a, a second sub pattern group SPG2 spaced farther from the first incident surface 121a, and a third sub pattern group SPG3 spaced farthest from the first incident surface 121a.

In the same way, the pattern groups PG belonging to the area J2 among the plurality of pattern groups PG may be divided into a plurality of sub pattern groups based on the distances to the second incident surface 122a. For example, the pattern groups PG belonging to the area J2 may be divided into a fourth sub pattern group SPG4 located closest to the second incident surface 122a, a fifth sub pattern group SPG5 spaced farther from the second incident surface 122a, and a sixth sub pattern group SPG6 spaced farthest from the second incident surface 122a.

So far, an example in which the pattern groups PG of each of the areas J1 and J2 area are divided into three sub pattern groups has been described, however, this is merely an example and the pattern groups PG of each of the areas J1 and J2 may be divided into two sub pattern groups, or four sub pattern groups or more.

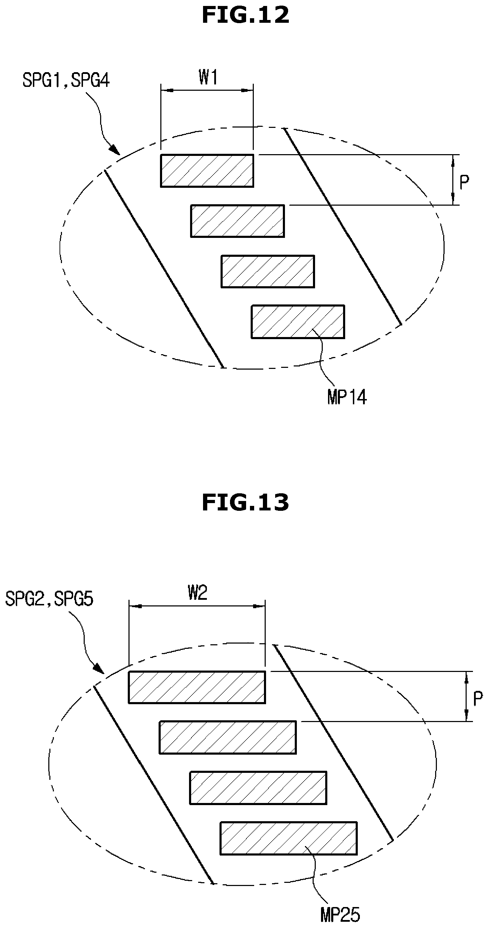

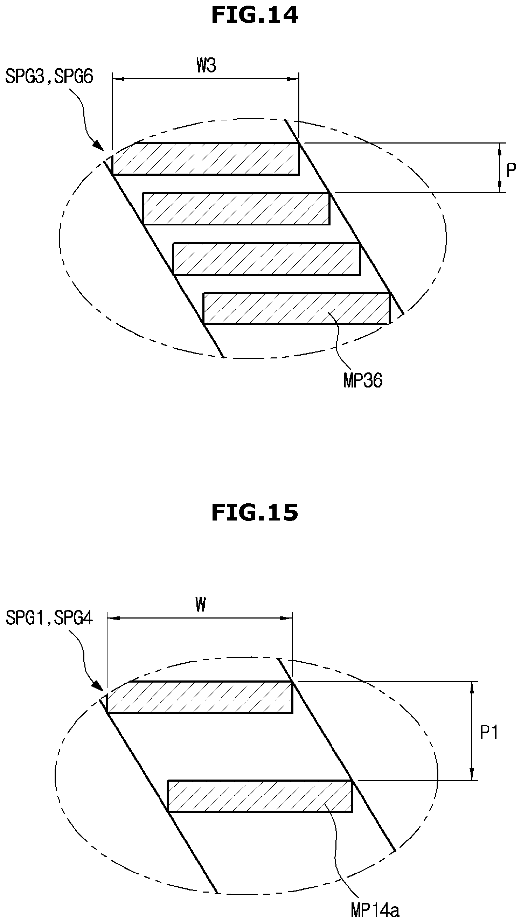

The first to sixth sub pattern groups SPG1 to SPG6 may be formed with different densities, respectively. FIGS. 12, 13, and 14 depict enlarged views showing examples of sub pattern groups SPG formed on the reflection surface 124a of the transparent light guide plate 120a. FIG. 12 depicts an enlarged view of the first or fourth sub pattern group SPG1 or SPG4, FIG. 13 depicts an enlarged view of the second or fifth sub pattern group SPG2 or SPG5, and FIG. 14 depicts an enlarged view of the third or sixth sub pattern group SPG3 or SPG6.

Referring to FIGS. 12, 13, and 14, each sub pattern group SPG may include a plurality of micro-patterns MP, and the plurality of micro-patterns MP may be spaced at regular intervals. Also, each micro-pattern MP may extend in a direction in which the first incident surface 121a or the second incident surface 122a extends, and a density of the corresponding sub pattern group SPG may depend on a width of each micro-pattern MP.

Referring to FIG. 12, a width of micro-patterns MP14 belonging to the first or fourth sub pattern group SPG1 or SPG4 may be W1. Referring to FIG. 13, a width of micro-patterns MP25 belonging to the second or fifth sub pattern group SPG2 or SPG5 may be W2 that is longer than W1. Also, referring to FIG. 14, a width of micro-patterns MP36 belonging to the third or sixth sub pattern group SPG3 or SPG6 may be W3 that is longer than W1 or W2. That is, W1<W2< W3. Meanwhile, the plurality of micro-patterns MP belonging to the respective sub pattern groups SPG may be arranged at the same intervals of p, as shown in FIGS. 12, 13, and 14.

That is, as a sub pattern group SPG is located at the longer distance to the first incident surface 121a or the second incident surface 122a, micro-patterns MP belonging to the sub pattern group SPG may have the longer width. The longer width of micro-patterns MP means the higher density of the corresponding sub pattern group SPG. The longer width of micro-patterns MP, the higher probability that light incident to the transparent light guide plate 120a arrives at the center area of the transparent light guide plate 120a.

Meanwhile, in FIG. 12, a case in which the density of micro-patterns MP formed in the first sub pattern group SPG1 is the same as that of micro-patterns MP formed in the fourth sub pattern group SPG4 is assumed, in FIG. 13, a case in which the density of micro-patterns MP formed in the second sub pattern group SPG2 is the same as that of micro-patterns MP formed in the fifth sub pattern group SPG5 is assumed, and in FIG. 14, a case in which the density of micro-patterns MP formed in the third sub pattern group SPG3 is the same as that of micro-patterns MP formed in the sixth sub pattern group SPG6 is assumed. However, micro-patterns MP formed in the respective sub pattern groups SPG may be arranged with different densities.

In FIGS. 12, 13, and 14, examples of differentiating the widths of micro-patterns MP belonging to the respective sub pattern groups SPG with the same intervals of p between the micro-patterns MP are shown. However, it is also possible to differentiate the arrangement intervals of micro-patterns MP with the same width W of the micro-patterns MP, according to exemplary embodiments.

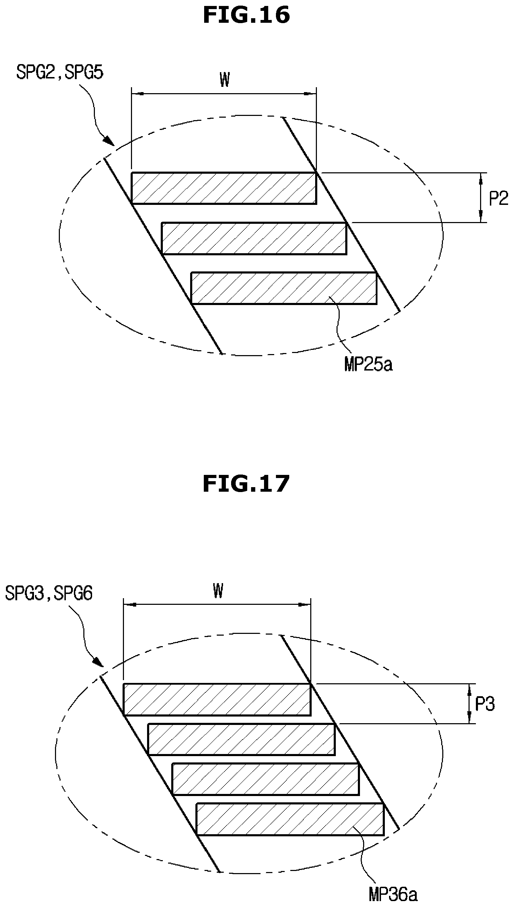

FIG. 15, 16, and 17 show other examples of sub pattern groups SPG formed on the reflection surfaces 124a of the transparent light guide plates 120a. FIG. 15 depicts an enlarged view of the first or fourth sub pattern group SPG1 or SPG4, FIG. 16 depicts an enlarged view of the second or fifth sub pattern group SPG2 or SPG5, and FIG. 17 depicts an enlarged view of the third or sixth sub pattern group SPG3 or SPG6.

Referring to FIGS. 15, 16, and 17, each sub pattern group SPG may include a plurality of micro-patterns MP, and the plurality of micro-patterns MP may be spaced at regular intervals. Also, each micro-pattern MP may extend in a direction in which the first incident surface 121a or the second incident surface 122a extends, and a density of the sub pattern group SPG may depend on intervals between the corresponding micro-patterns MP.

Referring to FIG. 15, a plurality of micro-patterns MP belonging to the first or fourth sub pattern group SPG1 or SPG4 may be spaced apart by a distance of P1. Referring to FIG. 16, a plurality of micro-patterns MP belonging to the second or fifth sub pattern group SPG2 or SPG5 may be spaced apart by a distance of P2. Also, referring to FIG. 17, a plurality of micro-patterns MP belonging to the third or sixth sub pattern group SPG3 or SPG6 may be spaced apart by a distance of P3. Herein, P1>P2>P3, and the plurality of micro-patterns MP may have the same width of W.

That is, as a sub pattern group SPG is located at the longer distance to the first incident surface 121a or the second incident surface 122a, micro-patterns MP belonging to the sub pattern group SPG may be arranged at the narrower intervals. The narrower the intervals of micro-patterns MP, the higher the density of the corresponding sub pattern group SPG. The narrower the intervals of micro-patterns MP, the higher the probability that light incident to the transparent light guide plate 120a arrives at the center area of the transparent light guide plate 120a.

However, it is also possible to differentiate the widths of micro-patterns MP belonging to the respective sub pattern groups, while differentiating the intervals of the micro-patterns MP belonging to the respective sub pattern groups, according to embodiments. That is, the embodiment shown in FIGS. 12, 13, and 14 may be combined with the embodiment shown in FIGS. 15, 16, and 17.

Meanwhile, in FIGS. 12 to 17, examples in which the plurality of micro-patterns MP extend in the direction in which the first incident surface 121a or the second incident surface 122a extends are shown. However, in a direction in which the micro-patterns MP extend is not limited to this.

Hereinafter, an operation principle of the transparent display apparatus 100a according to another exemplary embodiment of the present disclosure will be described.

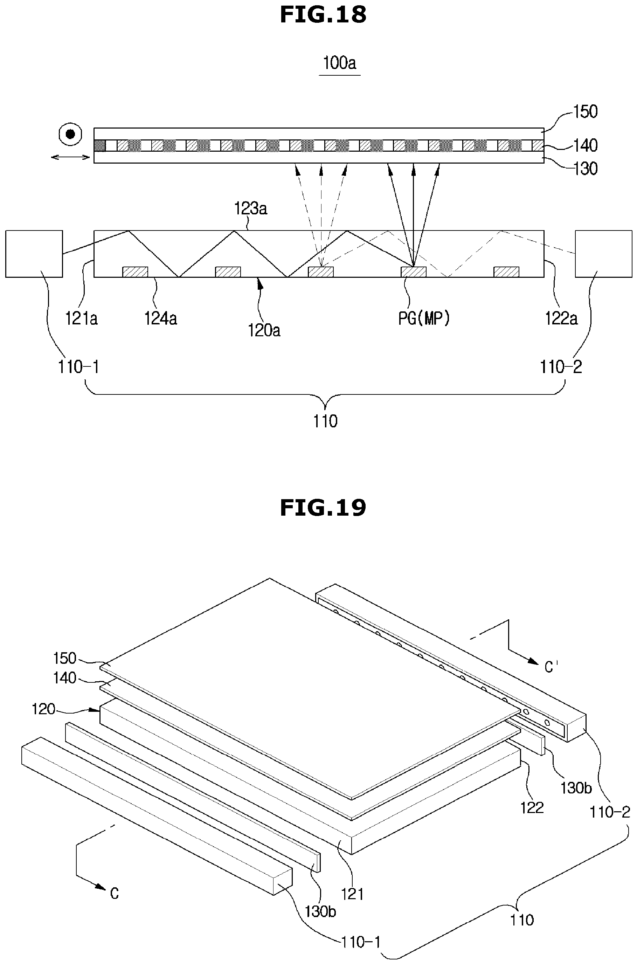

FIG. 18 depicts a view for describing an operation principle of the transparent display apparatus 100a according to another embodiment of the present disclosure. In FIG. 18, for convenience of description, a section of the transparent display apparatus 100a cut in a B-B' direction of FIG. 9 is shown.

As shown in FIG. 18, light generated by the light sources 110 may be incident to the incident surfaces 121a and 122a of the transparent light guide plate 120a. The light generated by the light sources 110 may be visible light, and include first polarized light and second polarized light. In FIG. 18, a case in which light generated by two light sources 110-1 and 110-2 is incident to the first incident surface 121a and the second incident surface 122a is shown, however, this is merely an example and the light may be incident in different manners.

The light incident to the first incident surface 121a and the second incident surface 122a may be totally reflected from the reflection surface 124a and the exit surface 123a. Accordingly, the light may travel in a direction away from the first incident surface 121 or the second incident surface 122, that is, toward the center area of the transparent light guide plate 120a.

The light traveling toward the center area of the transparent light guide plate 120a may be diffused at pattern groups PG formed on the reflection surface 124a, more specifically, at micro-patterns MP in the pattern groups PG formed on the reflection surface 124. The diffused light may be emitted forward through the exit surface 123a of the transparent light guide plate 120a. In the current embodiment, the micro-patterns MP may be grouped into a plurality of pattern groups PG, and each pattern group PG may function as a surface light source, as described above.

The light emitted forward may pass through the first polarizing plate 130 to be polarized in a first polarization direction. The light (referred to as first polarized light) polarized by first polarizing plate 130 may be incident to the liquid crystal panel 140 disposed in front of the first polarizing plate 130 so that a phase difference is generated in the first polarized light according to driving of liquid crystals included in the liquid crystal panel 140. If a phase difference is generated in the first polarized light, an amount of light that is transmitted through the second polarizing plate 150 may vary according to a degree of change in the phase difference so that a gray scale can be represented.

So far, the transparent display apparatus 100a according to another exemplary embodiment of the present disclosure has been described. Hereinafter, a transparent display apparatus 100b according to yet another exemplary embodiment of the present disclosure will be described.

The transparent display apparatus 100b according to another exemplary embodiment of the present disclosure can display transparent images, like the transparent display apparatus 100 of FIG. 2, although a configuration of the transparent display apparatus 100b is different from that of the transparent display apparatus 100.

FIG. 19 depicts an exploded perspective view showing a configuration of the transparent display apparatus 100b according to another embodiment of the present disclosure.

Referring to FIG. 19, the transparent display apparatus 100b according to another exemplary embodiment of the present disclosure may include one or more light sources 110 to generate light, one or more first polarizing plates 130b to transmit first polarized light of light generated by the light sources 110, a transparent light guide plate 120 to change a path of the first polarized light to emit the first polarized light, a liquid crystal panel 140 to change a phase of the first polarized light according to driving of liquid crystals, and a second polarizing plate 150 to adjust the amount of the first polarized light according to the changed phase of the first polarized light. In the transparent display apparatus 100b of FIG. 19, the light sources 110, the transparent light guide plate 120, the liquid crystal panel 140, and the second polarizing plate 150 may be the substantially same components as the corresponding ones described above with reference to FIG. 2, and accordingly, in the following description, differences between the transparent display apparatus 100b and the transparent display apparatus 100 shown in FIG. 2 will be described.

The transparent display apparatus 100b of FIG. 19 is different from the transparent display apparatus 100 of FIG. 2 in view of an arrangement of the first polarizing plates 130b. That is, the first polarizing plates 130b may be disposed between the light sources 110 and the incident surfaces 121 and 122 of the transparent light guide plate 120, according to an exemplary embodiment. If the light sources 110 are disposed along both sides of the transparent light guide plate 120, the first polarizing plates 130b may be disposed between the first light source 110-1 and the first incident surface 121 of the transparent light guide plate 120 and between the second light source 110-2 and the second incident surface 122 of the transparent light guide plate 120, respectively.

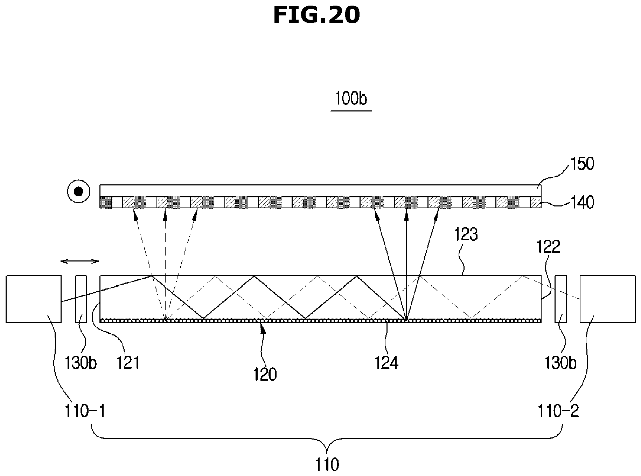

FIG. 20 depicts a view for describing an operation principle of the transparent display apparatus 100b according to another embodiment of the present disclosure. In FIG. 20, for convenience of description, a section of the transparent display apparatus 100b cut in a C-C' direction of FIG. 19 is shown.

As shown in FIG. 20, light generated by the light sources 110 may be incident to the first polarizing plate 130b. The light generated by the light sources 110 may be visible light, and include first polarized light and second polarized light. In FIG. 20, a case in which light generated by two light sources 110 including the first light source 110-1 and the second light source 110-2 is incident to the first incident surface 121 and the second incident surface 122 is shown, however, light may be incident in different manners.

The light generated by the light sources 110 may pass through the first polarizing plate 130b to be polarized in a first polarization direction. The light (referred to as first polarized light) polarized by the first polarizing plate 130b may be incident to the inside of the transparent light guide plate 120 through the first incident surface 121 or the second incident surface 122 formed at both sides of the transparent light guide plate 120.

The first polarized light incident to the inside of the transparent light guide plate 120 may be totally reflected from the reflection surface 124 and the exit surface 123 of the transparent light guide plate 120 so as to travel in a direction away from the incident surface 121 or 122, that is, toward the center area of the transparent light guide plate 120.

The first polarized light traveling toward the center area of the transparent light guide plate 120 may be diffused at micro-patterns MP formed on the reflection surface 124, and the diffused, first polarized light may be emitted forward through the exit surface 123 of the transparent light guide plate 120. The reflection surface 124 may function as a surface light source, as described above with reference to FIG. 8, and in the following description, descriptions about the same operations as described above with reference to FIG. 8 will be omitted.

Meanwhile, the first polarized light emitted forward through the exit surface 123 of the transparent light guide plate 120 may be incident to the liquid crystal panel 140 disposed in front of the transparent light guide plate 120, so that a phase difference is generated in the first polarized light based on the driving of liquid crystals included in the liquid crystal panel 140. If a phase difference is generated in the first polarized light, an amount of light that is transmitted through the second polarizing plate 150 may vary according to a degree of change in the phase difference so that a gray scale can be represented.

So far, the transparent display apparatus 100b according to another exemplary embodiment of the present disclosure has been described. Hereinafter, a transparent display apparatus 100c according to another exemplary embodiment of the present disclosure will be described.

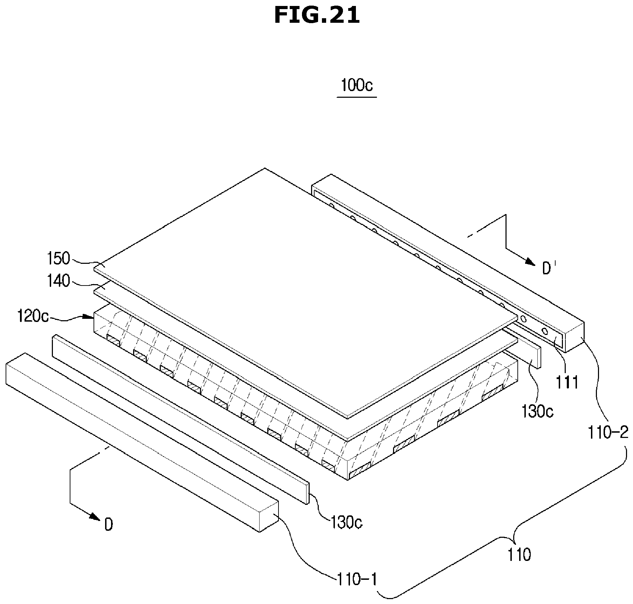

The transparent display apparatus 100c according to another exemplary embodiment of the present disclosure can display stereoscopic images, while displaying transparent images, like the transparent display apparatus 100a of FIG. 9. The stereoscopic images can be recognized without wearing 3D glasses. FIG. 21 depicts an exploded perspective view showing a configuration of the transparent display apparatus 100c capable of displaying stereoscopic images, according to another exemplary embodiment of the present disclosure.

Referring to FIG. 21, the transparent display apparatus 100c according to another exemplary embodiment of the present disclosure may include one or more light sources 110 to generate light, one or more first polarizing plates 130c to transmit first polarized light of light generated by the light sources 110, a transparent light guide plate 120c to change a path of the first polarized light to emit the first polarized light, a liquid crystal panel 140 to change a phase of the first polarized light according to driving of liquid crystals, and a second polarizing plate 150 to adjust the amount of the first polarized light according to the changed phase of the first polarized light. In the transparent display apparatus 100c of FIG. 21, the light sources 110, the transparent light guide plate 120c, the liquid crystal panel 140, and the second polarizing plate 150 may be the substantially same components as the corresponding ones described above with reference to FIG. 9, and the first polarizing plates 130c may be the substantially same components as the first polarizing plates 130b described above with reference to FIG. 19. Therefore, the same descriptions as those given above with reference to FIGS. 6 and 19 will be omitted.

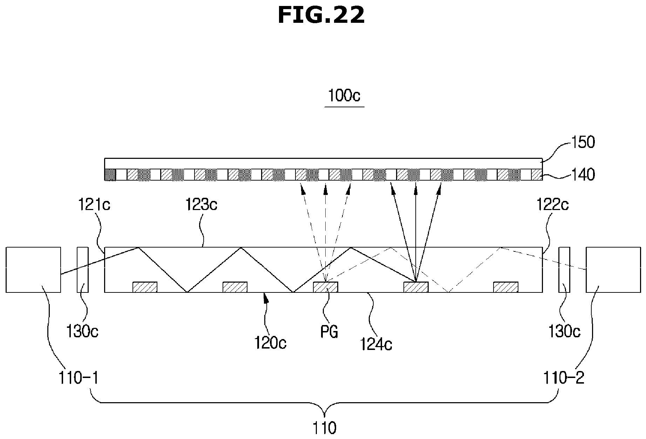

FIG. 22 depicts a view for describing an operation principle of the transparent display apparatus 100c according to another exemplary embodiment of the present disclosure. In FIG. 22, for convenience of description, a section of the transparent display apparatus 100c cut in a D-D' direction of FIG. 21 is shown.

Referring to FIG. 22, light generated by the light sources 110 may be incident to the first polarizing plates 130c.

The light generated by the light sources 110 may pass through the first polarizing plates 130c to be polarized in a first polarization direction. The light (referred to as first polarized light) polarized by the first polarizing plates 130c may be incident to the inside of the transparent light guide plate 120c through the first incident surface 121c or the second incident surface 122c formed at both sides of the transparent light guide plate 120C.

The first polarized light incident to the inside of the transparent light guide plate 120c may be totally reflected from the reflection surface 124c and the exit surface 123c of the transparent light guide plate 120c so as to travel toward the center area of the transparent light guide plate 120c.

The first polarized light traveling toward the center area of the transparent light guide plate 120c may be diffused at micro-patterns MP of pattern groups PG formed on the reflection surface 124c, and the diffused, first polarized light may be emitted forward through the exit surface 123c of the transparent light guide plate 120c.In the current embodiment, the micro-patterns MP may be grouped into a plurality of pattern groups PG on the reflection surface 124c, and each pattern group PG may function as a surface light source. In other words, the plurality of pattern groups PG may function as openings of a parallax barrier in order to display auto-stereoscopic images.

The first polarized light emitted forward may be incident to the liquid crystal panel 140 disposed in front of the transparent light guide plate 120c. In the liquid crystal panel 140, a phase difference may be generated in the first polarized light according to driving of a liquid crystal layer. If a phase difference is generated in the first polarized light, an amount of light that is transmitted through the second polarizing plate 150 may vary based on a degree of change in the phase difference so that a gray scale can be represented.

So far, a case in which transparent images or transparent, auto-stereoscopic images are displayed on one side of a transparent display apparatus has been described. Meanwhile, according to exemplary embodiments, transparent images or transparent, auto-stereoscopic images can be displayed on both sides of a transparent display apparatus. Hereinafter, an embodiment in which images are displayed on both sides of a transparent display apparatus will be described.

First, an example of displaying transparent images on both sides of a transparent display apparatus will be described, and then an example of displaying auto-stereoscopic images while displaying transparent images on both sides of a transparent display apparatus will be described.

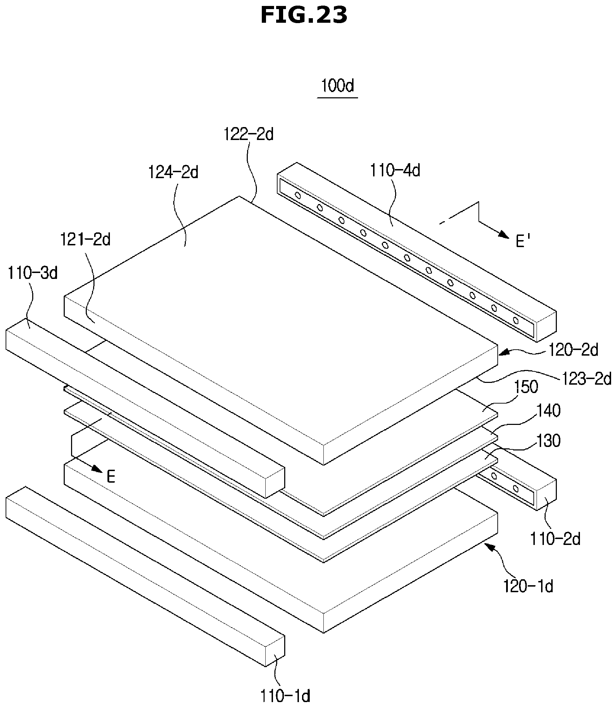

FIG. 23 depicts an exploded perspective view showing a configuration of a transparent display apparatus 100d according to another embodiment of the present disclosure. The transparent display apparatus 100d according to another exemplary embodiment of the present disclosure can display images on its both sides.

Referring to FIG. 23, the transparent display apparatus 100d according to another exemplary embodiment of the present disclosure may further include a transparent light guide plate 120-2d disposed in front of the second polarizing plate 150, and two light sources 110-3d and 110-4d disposed along both sides of the transparent light guide plate 120-2d, in addition to the configuration of the transparent display apparatus 100 shown in FIG. 2. In order to distinguish the current exemplary embodiment from the exemplary embodiments described above, two transparent light guide plates 120-1d and 120-2d may be referred to as a first transparent light guide plate 120-1d and a second transparent light guide plate 120-2d, two light sources 110-1d and 110-2d disposed along both sides of the first transparent light guide plate 120-1d may be referred to as a first light source 110-1d and a second light source 110-2d, and the two light sources 110-3d and 110-4d disposed along both sides of the second transparent light guide plate 120-2d may be referred to as a third light source 110-3d and a fourth light source 110-4d. The first transparent light guide plate 120-1d, the first light source 110-1a, the second light source 110-2d, the first polarizing plate 130, the liquid crystal panel 140, and the second polarizing plate 150 have been described above, and accordingly, further descriptions thereof will be omitted.

The second transparent light guide plate 120-2d may be disposed in front of the second polarizing plate 150, and may be in the shape of a rectangular plate. The second transparent light guide plate 120-2d may include a first incident surface 121-2d and a second incident surface 122-2d to which light is incident, an exit surface 123-2d to connect the first incident surface 121-2d to the second incident surface 122-2d and to emit light, a reflection surface 124-2d to connect the first incident surface 121-2d to the second incident surface 122-2d and being opposite to the exit surface1 23-2d, and micro-patterns MP formed on the reflection surface 124-2d to diffuse incident light.

The first incident surface 121-2d and the second incident surface 122-2d may be defined as the lateral sides of the transparent light guide plate 120-2d. The first incident surface 121-2d and the second incident surface 122-2d may be disposed adjacent to the third light source 110-3d and the fourth light source 110-4d, respectively, so that light generated by the light sources 110-3d and 110-4d can be incident to the second transparent light guide plate 120-2d. In FIG. 23, an example in which the second transparent light guide plate 120-2d includes two incident surfaces 121-2d and 122-2d is shown, however, this is merely an example and the second transparent light guide plate 120-2d may include one incident surface, or three incident surfaces or more.

Meanwhile, the exit surface 123-2d may face the second polarizing plate 150, and accordingly, the reflection surface 124-d may be disposed to face the outside of the transparent display apparatus 100d. On the reflection surface 124-2d may be formed a plurality of micro-patterns MP. In this case, the micro-patterns MP formed on the reflection surface 124 -2d may diffuse light generated by the third light source 110-3d or the fourth light source 110-4d toward the first transparent light guide plate 120-1d. In the current embodiment, the micro-patterns MP formed in the second transparent light guide plate 120-2d may be the same as or similar to the micro-patterns MP described above with reference to FIGS. 3 and 4, and accordingly, further descriptions thereof will be omitted.

Meanwhile, although not shown in FIG. 23, a plurality of pattern groups of micro-patterns MP may be formed on the reflection surfaces 124-1d and 124-2d of the first transparent light guide plate 120-1d and the second transparent light guide plate 120-2d. In this case, autostereoscopic images can be displayed on both sides of the transparent display apparatus 100d. Also, a plurality of pattern groups of micro-patterns MP may be formed on any one of the reflection surfaces 124-1d and 124-2d of the first transparent light guide plate 120-1d and the second light guide plate 120-2d, so that autostereoscopic images can be displayed on one side of the transparent display apparatus 100d, and transparent images can be displayed on the other side of the transparent display apparatus 100d.

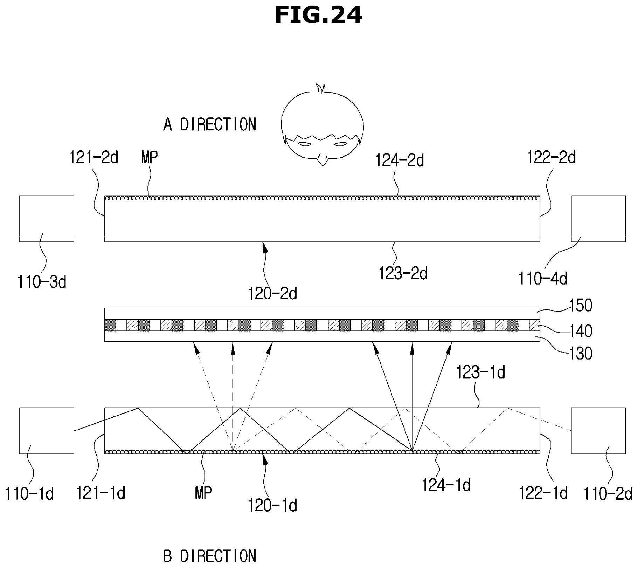

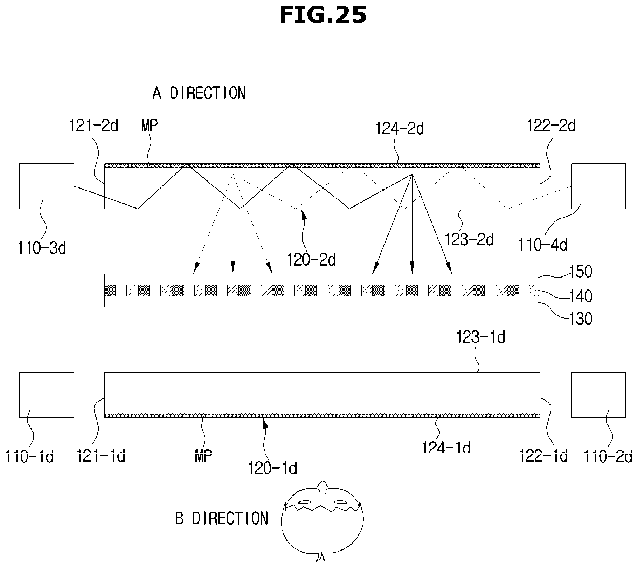

FIGS. 24 and 25 depict views for describing an operation principle of the transparent display apparatus 100d according to another embodiment of the present disclosure. In FIGS. 24 and 25, for convenience of description, a section of the transparent display apparatus 100d cut in an E-E' direction of FIG. 23 is shown.

FIG. 24 shows an example in which images are displayed in an "A" direction, and FIG. 25 shows an example in which images are displayed in a "B" direction.

Referring to FIG. 24, light generated by the first and second light sources 110-1d and 110-2d may be incident to the incident surfaces 121-1d and 122-1d of the first transparent light guide plate 120-1d.

The incident light may be totally reflected from the reflection surfaces 124-1d and the exit surface 123-1d so as to travel in a direction away from the incident surfaces 121-1d and 122-1d, that is, toward the center area of the first transparent light guide plate 120-1d.

The light traveling toward the center area of the first transparent light guide plate 120-1d may be diffused at micro-patterns MP formed on the reflection surface 124-1d, and the diffused light may be emitted in the "A" direction through the exit surface 123-1d of the first transparent light guide plate 120-1d.

The light emitted in the "A" direction may pass through the first polarizing plate 130 to be polarized in a first polarization direction. The light (referred to as first polarized light) polarized by the first polarizing plate 130 may be incident to the liquid crystal panel 140 disposed in front of the first polarizing plate 130 so that a phase difference is generated in the first polarized light according to driving of liquid crystals included in the liquid crystal panel 140. If a phase difference is generated in the first polarized light, an amount of light that is transmitted through the second polarizing plate 150 may vary according to a degree of change in the phase difference so that a gray scale can be represented.

The light transmitted through the second polarizing plate 150 may be incident to the second transparent light guide plate 120-2d. At this time, since the light is incident to the front part of the reflection surface 124-2d, and not to the lateral side of the reflection surface 124-2d, a major part of the light may be transmitted through the second transparent light guide plate 120-2d. As a result, an image may be displayed in the "A" direction on the transparent display apparatus 100d.

Referring to FIG. 25, light generated by the third light source 110-3d and the fourth light source 110-4d may be incident to the incident surfaces of the second transparent light guide plate 120-2d.

The incident light may be totally reflected from the reflection surface 124-2d and the exit surface 123-2d so as to travel toward the center area of the second transparent light guide plate 120-2d.

The light traveling toward the center area of the second transparent light guide plate 120-2d may be diffused at micro-patterns MP formed on the reflection surface 124-2d, and the diffused light may be emitted in a "B" direction through the exit surface 123-2d of the second transparent light guide plate 120-2d.

The light emitted in the "B" direction may pass through the second polarizing plate 150 to be polarized in a second polarization direction. The light (hereinafter, referred to as second polarized light) polarized by the second polarizing plate 150 may be incident to the liquid crystal panel 140 disposed in front of the second polarizing plate 150, so that a phase difference may be generated in the second polarized light according to driving of liquid crystals included in the liquid crystal panel 140. If a phase difference is generated in the second polarized light, an amount of light that is transmitted through the second polarizing plate 150 may vary according to a degree of change in the phase difference so that a gray scale can be represented.

Light transmitted through the first polarizing plate 130 may be incident to the first transparent light guide plate 120-1d. At this time, since the light is incident to the front part of the reflection surface 124-1d, and not to the lateral side of the reflection surface 124-1d, a major part of the light may be transmitted through the first transparent light guide plate 120-1d. As a result, an image may be displayed in the "B" direction on the transparent display apparatus 100d.

As such, the transparent display apparatus 100d according to the current exemplary embodiment can display an image in the "A" direction or in the "B" direction as necessary, and accordingly, the transparent display apparatus 100d can be applied in various forms including a smart window.

Hereinafter, a transparent display apparatus 100e capable of displaying images on both sides, according to another exemplary embodiment of the present disclosure, will be described.

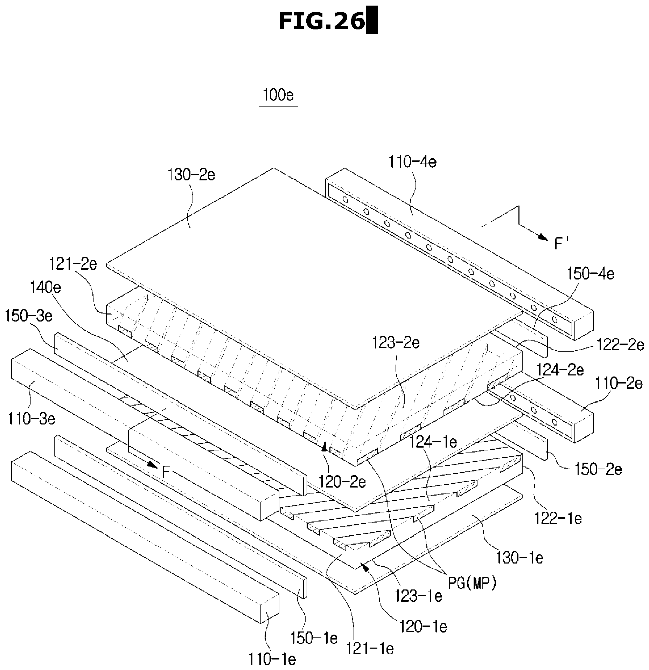

FIG. 26 depicts an exploded perspective view showing a configuration of the transparent display apparatus 100e according to another exemplary embodiment of the present disclosure. The transparent display apparatus 100e according to another exemplary embodiment of the present disclosure can display auto-stereoscopic images on both sides.

Referring to FIG. 26, the transparent display apparatus 100e according to another exemplary embodiment of the present disclosure may include a first transparent light guide plate 120-1e, a liquid crystal panel 140e disposed in front of the first transparent light guide plate 120-1e, a second transparent light guide plate 120-2e disposed in front of the liquid crystal panel 140e, first polarizing plates 130-1e and 130-2e disposed to face an exit surface 123-1e of the first transparent light guide plate 120-1e and an exit surface 123-2e of the second transparent light guide plate 120-2e, respectively, second polarizing plates 150-1e, 150-2e, 150-3e, and 150-4e disposed along both sides of the first transparent light guide plate 120-1e and the second transparent light guide plate 120-2e, a first light source 110-1e and a second light source 110-2e disposed along both sides of the first transparent light guide plate 120-1e, and a third light source 110-3e and a fourth light source 110-4e disposed along both sides of the second transparent light guide plate 120-2e.

The first transparent light guide plate 120-1e and the second transparent light guide plate 120-2e may be in the shape of a rectangular plate. The first transparent light guide plate 120-1e and the second transparent light guide plate 120-2e may respectively include first incident surfaces 121-1e and 121-2e and second incident surfaces 122-1e and 122-2e to which light is incident, exit surfaces 123-1e and 123-2e to connect the first incident surfaces 121-1e and 121-2e to the second incident surfaces 122-1e and 122-2e and to emit light, reflection surfaces 124-1e and 124-2e to connect the first incident surfaces 120-1e and 120-2e to the second incident surfaces 122-1e and 122-2e and being opposite to the exit surfaces 123-1e and 123-2e, and micro-patterns MP formed on the reflection surfaces 124-1e and 124-2e to diffuse incident light.

The first transparent light guide plate 120-1e may be disposed such that the reflection surface 124-1e of the first transparent light guide plate 120-1e faces the liquid crystal panel 140e, and the second transparent light guide plate 120-2e may be disposed such that the reflection surface 124-2e of the second transparent light guide plate 120-2e faces the liquid crystal panel 140e. Also, on the reflection surface 124-1e of the first transparent light guide plate 120-1e and the reflection surface 124-2e of the second transparent light guide plate 120-2e may be formed a plurality of pattern groups into which a plurality of micro-patterns MP are grouped. Herein, the plurality of pattern groups PG may be spaced at regular intervals, and each pattern group PG may be in the shape of a long rod to function as a linear light source. The pattern groups PG have been described above with reference to FIGS. 10 and 11, and accordingly, further descriptions about the pattern groups PG will be omitted.

The first polarizing plates 130-1e and 130-2e may be disposed to face the exit surface 123-1e of the first transparent light guide plate 120-1e and the exit surface 123-2e of the second transparent light guide plate 120-2e. Herein, the first polarizing plates 130-1e and 130-2e may be reflection-type polarizing plates to reflect first polarized light. In the current embodiment for implementing the transparent display apparatus 100e, the first polarizing plates 130-1e and 130-2e may be fabricated with a transparent material.

The second polarizing plates 150-1e, 150-2e, 150-3e, and 150-4e may be disposed along both sides of the first transparent light guide plate 120-1e and the second transparent light guide plate 120-2e. More specifically, the second polarizing plates 150-1e, 150-2e, 150-3e, and 150-4e may be respectively disposed between the first light source 110-1e and the first transparent light guide pate 120-1e, between the second light source 110-2e and the first transparent light guide plate 120-1e, between the third light source 110-3e and the second transparent light guide plate 120-2e, and between the fourth light source 110-4e and the second transparent light guide plate 120-2e. The plurality of light sources 110-1e, 110-2e, 110-3e, and 110-4e may generate visible light including first polarized light and second polarized light, and the second polarizing plates 150-1e, 150-2e, 150-3e, and 150-4e may transmit second polarized light of light generated by the light sources 110-1e, 110-2e, 110-3e, and 110-4e.

Meanwhile, a surface light source may be implemented by forming micro-patterns MP uniformly without forming pattern groups PG on the reflection surfaces 124-1e and 124-2e of the first transparent light guide plate 120-1e and the second transparent light guide plate 120-2e. In this case, it is possible to display transparent images on both sides of the transparent display apparatus 100e. Also, a surface light source may be implemented by forming a plurality of pattern groups PG of micro-patterns MP on any one of the reflection surface 124-1e of the first transparent light guide plate 120-1e or the reflection surface 124-2e of the second transparent light guide plate 120-2e, and forming micro-patterns MP uniformly on the other one of the reflection surfaces 124-1e and 124-2e, so that autostereoscopic images can be displayed on one side of the transparent display apparatus 100e, and transparent images can be displayed on the other side of the transparent display apparatus 100d.

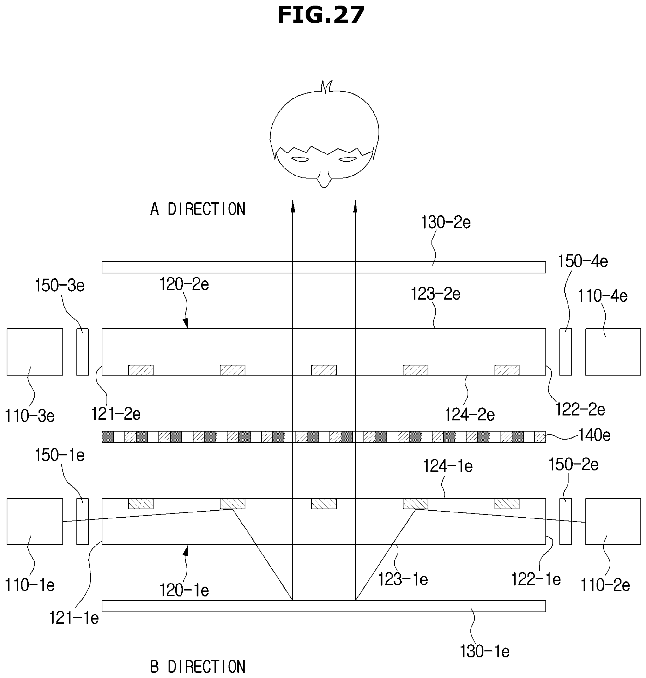

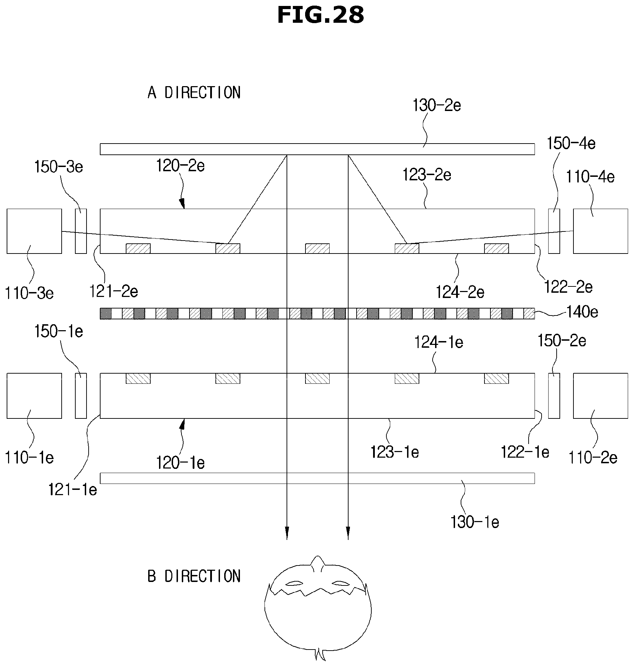

FIGS. 27 and 28 are views for describing an operation principle of the transparent display apparatus 100e according to another exemplary embodiment of the present disclosure. In FIGS. 27 and 28, for convenience of description, a section of the transparent display apparatus 100e cut in a F-F' direction of FIG. 26 is shown.

FIG. 27 shows an example in which images are displayed in an "A" direction, and FIG. 28 shows an example in which images are displayed in a "B" direction.

Referring to FIG. 27, light generated by the first light source 110-1e and the second light source 110-2e may be incident to the second polarizing plates 150-1e and 150-2e disposed along both sides of the first transparent light guide plate 120-1e.

The light incident to the second polarizing plates 150-1e and 150-2e may be transmitted through the second polarizing plates 150-1e and 150-2e so as to be polarized in a second polarization direction. The light (hereinafter, referred to as second polarized light) polarized by the second polarizing plates 150-1e and 150-2e may be incident to the inside of the first transparent light guide plate 120-1e through the first incident surface 121-1e and the second incident surface 122-1e formed at both sides of the first transparent light guide plate 120-1e.

The second polarized light incident to the inside of the first transparent light guide plate 120-1e may be totally reflected from the reflection surface 124-1e and the exit surface 123-1e of the first transparent light guide plate 120-1e. The second polarized light may be totally reflected to travel in a direction away from the incident surface 121-1e or 122-1e, that is, toward the center area of the first transparent light guide plate 120-1e.

The second polarized light traveling toward the first transparent light guide plate 120-1e may be diffused at a plurality of pattern groups PG formed on the reflection surface 124a-1e, more specifically, at micro-patterns MP of the pattern groups PG formed on the reflection surface 124-1e. The diffused, second polarized light may be emitted to the first polarizing plate 130-1e disposed in front of the exit surface 123-1e of the first transparent light guide plate 120-1e.

The second polarized light emitted to the first polarizing plate 130-1e may be reflected by the first polarizing plate 130-1e, and then incident to the liquid crystal panel 140e. The first polarizing plate 130-1e, which is a reflection-type polarizing plate, may have such a property of transmitting only first polarized light and reflecting the other polarized light. Accordingly, the second polarized light incident to the first polarizing plate 130-1e may be reflected again and may then incident on the liquid crystal panel 140e.

The phase of the second polarized light incident to the liquid crystal panel 140e may vary according to driving of liquid crystals, and the second polarized light may be transmitted through the second transparent light guide plate 120-2e and the first polarizing plate 130-2e disposed in front of the liquid crystal panel 140e, so that a stereoscopic image can be displayed in the "A" direction.

Referring to FIG. 28, light generated by the third light source 110-3e and the fourth light source 110-4e may be incident to the second polarizing plate 150-3e and 150-4e disposed along both sides of the second transparent light guide plate 120-2e.

The light incident to the second polarizing plates 150-3e and 150-4e may be transmitted through the second polarizing plates 150-3e and 150-4e so as to be polarized in a second polarization direction. The light (hereinafter, referred to as second polarized light) polarized by the second polarizing plates 150-3e and 150-4e may be incident on the inside of the second transparent light guide plate 120-2e through the first incident surface 121-2e or the second incident surface 122-2e formed at the lateral side of the second transparent light guide plate 120-2e.

The second polarized light incident to the inside of the second transparent light guide plate 120-2e may be diffused at a plurality of pattern groups PG formed on the reflection surface 124a-2e, and the diffused, second polarized light may be emitted to the first polarizing plate 130-2e disposed in front of the lateral side of the exit surface 123-2e of the second transparent light guide plate 120-2e.

The second polarized light emitted to the first polarizing plate 130-2e may be reflected from the first polarizing plate 130-2e, and may then incident on the liquid crystal panel 140e. As a result, an autostereoscopic image may be displayed in the "B" direction. A method of displaying an auto-stereoscopic image in the "B" direction is the substantially same as the method of displaying an autostereoscopic image in the "A" direction as described above with reference to FIG. 27, and accordingly, further descriptions about the method will be omitted.

So far, the configurations and operation principles of the transparent display apparatuses 100, 100a, 100b, 100c, 100d, and 100e have been described.

According to the transparent display apparatus configured as described above, the following effects can be obtained.

First, by forming micro-patterns on a reflection surface, transparent images can be displayed. Also, by forming a plurality of pattern groups, transparent, auto-stereoscopic images can be displayed. Also, by adjusting the densities of patterns formed in the plurality of pattern groups, brightness can be improved in the center area of the transparent display apparatus.

Although a few embodiments of the present disclosure have been shown and described, it would be appreciated by those skilled in the art that changes may be made in these embodiments without departing from the principles of the invention, the scope of which is defined in the claims.

## Claims

1. A transparent display apparatus (100) comprising:
a light source (110) configured to generate light;
a transparent light guide plate (120) configured to change a path of the generated light, and to emit the light;
a first polarizing plate (130) configured to transmit first polarized light of light emitted from the transparent light guide plate;
a liquid crystal panel (140) configured to change a phase of the first polarized light according to driving of liquid crystals; and
a second polarizing plate (150) configured to adjust an amount of the first polarized light according to the changed phase of the first polarized light,
wherein the transparent light guide plate comprises:
an incident surface (121) on which the light is incident;
an exit surface (123);
a reflection surface (124) being opposite to the exit surface; and
a plurality of micro-patterns MP, formed on the reflection surface, configured to diffuse the incident light through the exit surface,
wherein the plurality of micro-patterns form a plurality of pattern groups and the plurality of pattern groups are spaced at regular intervals, **characterized in that** the pattern groups are shaped as long rods and the spacing of the pattern groups is such that the pattern groups function as the openings of a parallax barrier in order for the display apparatus to display auto-stereoscopic images.

2. The transparent display apparatus according to claim 1,
wherein the plurality of micro-patterns are formed uniformly or discontinuously on the reflection surface.

3. The transparent display apparatus according to claim 1,
wherein the plurality of micro-patterns are densely formed in a center area of the reflection surface, and sparsely formed in areas of the reflection surface closer to the incident surface.

4. The transparent display apparatus according to claim 1,
wherein the plurality of pattern groups are divided into a plurality of sub pattern groups according to distances to the incident surface, and
wherein the plurality of micro-patterns are arranged at different intervals according to sub pattern groups to which the plurality of micro-patterns belong.

5. The transparent display apparatus according to claim 4,
wherein if a sub pattern group to which a part of the plurality of micro-patterns belongs is located at the longer distance to the incident surface, the part of the plurality of micro-patterns is arranged at narrower intervals or has the longer width.

6. The transparent display apparatus according to claim 1, 4 or 5,
wherein the plurality of pattern groups are inclined at a predetermined angle with respect to the incident surface.

7. The transparent display apparatus according to any one of the preceding claims,
wherein the plurality of micro-patterns extend in a direction in which the incident surface extends, and are formed in at least one pattern from among a triangular-prism pattern, a round-prism pattern, and a lenticular pattern.

8. A transparent display (100) comprising:
a light source (110) configured to generate light;
a first polarizing plate (130b) configured to transmit first polarized light of the light generated by the light source;
a transparent light guide plate (120) configured to change a path of the first polarized light, and to emit the light;
a liquid crystal panel (140) configured to change a phase of the first polarized light according to driving of liquid crystals; and
a second polarizing plate (150) configured to adjust an amount of the first polarized light according to the changed phase of the first polarized light,
wherein the transparent light guide plate comprises:
an incident surface (121) on which the light is incident;
an exit surface (123);
a reflection surface (124) being opposite to the exit surface; and
a plurality of micro-patterns, formed on the reflection surface, configured to diffuse the incident light through the exit surface,
wherein the plurality of micro-patterns form a plurality of pattern groups and the plurality of pattern groups are spaced at regular intervals, **characterized in that** the pattern groups are shaped as long rods and the spacing of the pattern groups is such that the pattern groups function as the openings of a parallax barrier in order for the display apparatus to display auto-stereoscopic images.

9. The transparent display apparatus according to claim 8,
wherein the plurality of micro-patterns are formed uniformly or discontinuously on the reflection surface.

10. The transparent display apparatus according to claim 8,
wherein the plurality of micro-patterns are densely formed in a center area of the reflection surface, and sparsely formed in areas of the reflection surface closer to the incident surface.

11. The transparent display apparatus according to claim 8,
wherein the plurality of pattern groups are formed discontinuously at regular intervals.

12. The transparent display apparatus according to claim 11,
wherein the plurality of pattern groups are divided into a plurality of sub pattern groups according to distances to the incident surface, and
wherein as a sub pattern group to which a part of the plurality of micro-patterns belongs is located at the longer distance to the incident surface, the part of the plurality of micro-patterns is arranged at narrower intervals or has the longer width.

13. The transparent display apparatus according to claim 11 or 12, wherein the plurality of pattern groups are inclined at a predetermined angle with respect to the incident surface.

14. The transparent display apparatus according to any one of claims 8 to 13, wherein
the plurality of micro-patterns extend in a direction in which the incident surface extends, and
wherein the plurality of micro-patterns are formed in at least one pattern from among a triangular-prism pattern, a round-prism pattern, and a lenticular pattern.

## Patentansprüche

1. Transparente Anzeigevorrichtung (100), umfassend:
eine Lichtquelle (110), die zum Erzeugen von Licht konfiguriert ist;
eine transparente Lichtleitplatte (120), die zum Ändern eines Wegs des erzeugten Lichts und zum Abstrahlen des Lichts konfiguriert ist;
eine erste Polarisierungsplatte (130), die zum Durchlassen von erstem polarisiertem Licht von durch die transparente Lichtleitplatte abgestrahltem Licht konfiguriert ist;
eine Flüssigkristalltafel (140), die zum Ändern einer Phase des ersten polarisierten Lichts gemäß dem Ansteuern von Flüssigkristallen konfiguriert ist; und
eine zweite Polarisierungsplatte (150), die zum Einstellen einer Menge des ersten polarisierten Lichts gemäß der geänderten Phase des ersten polarisierten Lichts konfiguriert ist;
wobei die transparente Lichtleitplatte Folgendes umfasst:
eine Einfallfläche (121), auf die das Licht fällt;
eine Austrittsfläche (123);
eine Reflexionsfläche (124), die der Austrittsfläche entgegengesetzt ist; und
mehrere auf der Reflexionsfläche gebildete Mikrostrukturen MP, die zum Streuen des einfallenden Lichts durch die Austrittsfläche konfiguriert sind,
wobei die mehreren Mikrostrukturen mehreren Strukturgruppen bilden und die mehreren Strukturgruppen in regelmäßigen Abständen beabstandet sind,
**dadurch gekennzeichnet, dass** die Strukturgruppen als lange Stäbe geformt sind und die Beabstandung der Strukturgruppen so ist, dass die Strukturgruppen als die Öffnungen einer Parallaxbarriere funktionieren, damit die Anzeigevorrichtung autostereoskopische Bilder anzeigt.

2. Transparente Anzeigevorrichtung nach Anspruch 1,
wobei die mehreren Mikrostrukturen gleichmäßig oder diskontinuierlich auf der Reflexionsfläche gebildet sind.

3. Transparente Anzeigevorrichtung nach Anspruch 1,
wobei die mehreren Mikrostrukturen in einem zentralen Bereich der Reflexionsfläche dicht ausgebildet sind und in Bereichen der Reflexionsfläche, die näher an der Einfallfläche sind, spärlicher ausgebildet sind.

4. Transparente Anzeigevorrichtung nach Anspruch 1,
wobei die mehreren Strukturgruppen gemäß Abständen zur Einfallfläche in mehrere Teilstrukturgruppen unterteilt sind und
wobei die mehreren Mikrostrukturen in verschiedenen Abständen gemäß Teilstrukturgruppen, zu denen die mehreren Mikrostrukturen gehören, angeordnet sind.

5. Transparente Anzeigevorrichtung nach Anspruch 4,
wobei, falls eine Teilstrukturgruppe, zu der ein Teil der mehreren Mikrostrukturen gehört, sich in der größeren Entfernung zur Einfallfläche befindet, der Teil der mehreren Mikrostrukturen in engeren Abständen angeordnet ist oder eine größere Breite hat.

6. Transparente Anzeigevorrichtung nach Anspruch 1, 4 oder 5,
wobei die mehreren Strukturgruppen in einem vorbestimmten Winkel in Bezug auf die Einfallfläche geneigt sind.

7. Transparente Anzeigevorrichtung nach einem der vorhergehenden Ansprüche,
wobei die mehreren Mikrostrukturen sich in einer Richtung erstrecken, in der sich die Einfallfläche erstreckt, und in wenigstens einer Struktur aus einer Dreiecksprismastruktur, einer Rundprismastruktur und einer linsenförmigen Struktur ausgebildet sind.

8. Transparente Anzeige (100), umfassend:
eine Lichtquelle (110), die zum Erzeugen von Licht konfiguriert ist;
eine erste Polarisierungsplatte (130b), die zum Durchlassen von erstem polarisiertem Licht des durch die Lichtquelle erzeugten Lichts konfiguriert ist;
eine transparente Lichtleitplatte (120), die zum Ändern eines Wegs des ersten polarisierten Lichts und zum Abstrahlen des Lichts konfiguriert ist;
eine Flüssigkristalltafel (140), die zum Ändern einer Phase des ersten polarisierten Lichts gemäß dem Ansteuern von Flüssigkristallen konfiguriert ist; und
eine zweite Polarisierungsplatte (150), die zum Einstellen einer Menge des ersten polarisierten Lichts gemäß der geänderten Phase des ersten polarisierten Lichts konfiguriert ist;
wobei die transparente Lichtleitplatte Folgendes umfasst:
eine Einfallfläche (121), auf die das Licht fällt;
eine Austrittsfläche (123);
eine Reflexionsfläche (124), die der Austrittsfläche entgegengesetzt ist; und
mehrere auf der Reflexionsfläche gebildete Mikrostrukturen, die zum Streuen des einfallenden Lichts durch die Austrittsfläche konfiguriert sind,
wobei die mehreren Mikrostrukturen mehrere Strukturgruppen bilden und die mehreren Strukturgruppen in regelmäßigen Abständen beabstandet sind,
**dadurch gekennzeichnet, dass** die Strukturgruppen als lange Stäbe geformt sind und die Beabstandung der Strukturgruppen so ist, dass die Strukturgruppen als die Öffnungen einer Parallaxbarriere funktionieren, damit die Anzeigevorrichtung autostereoskopische Bilder anzeigt.

9. Transparente Anzeigevorrichtung nach Anspruch 8,
wobei die mehreren Mikrostrukturen gleichmäßig oder diskontinuierlich auf der Reflexionsfläche gebildet sind.

10. Transparente Anzeigevorrichtung nach Anspruch 8,
wobei die mehreren Mikrostrukturen in einem zentralen Bereich der Reflexionsfläche dicht ausgebildet sind und in Bereichen der Reflexionsfläche, die näher an der Einfallfläche sind, spärlicher ausgebildet sind.

11. Transparente Anzeigevorrichtung nach Anspruch 8,
wobei die mehreren Strukturgruppen in regelmäßigen Abständen diskontinuierlich ausgebildet sind.

12. Transparente Anzeigevorrichtung nach Anspruch 11,
wobei die mehreren Strukturgruppen gemäß Abständen zur Einfallfläche in mehrere Teilstrukturgruppen unterteilt sind und
wobei, wenn eine Teilstrukturgruppe, zu der ein Teil der mehreren Mikrostrukturen gehört, sich in der größeren Entfernung zur Einfallfläche befindet, der Teil der mehreren Mikrostrukturen in engeren Abständen angeordnet ist oder eine größere Breite hat.

13. Transparente Anzeigevorrichtung nach Anspruch 11 oder 12, wobei die mehreren Strukturgruppen in einem vorbestimmten Winkel in Bezug auf die Einfallfläche geneigt sind.

14. Transparente Anzeigevorrichtung nach einem der Ansprüche 8 bis 13, wobei die mehreren Mikrostrukturen sich in einer Richtung erstrecken, in der sich die Einfallfläche erstreckt, und
wobei die mehreren Mikrostrukturen in wenigstens einer Struktur aus einer Dreiecksprismastruktur, einer Rundprismastruktur und einer linsenförmigen Struktur ausgebildet sind.

## Revendications

1. Appareil d'affichage transparent (100) comprenant :
une source de lumière (110) configurée pour générer de la lumière ;
une plaque guide de lumière transparente (120) configurée pour modifier un trajet de la lumière générée et pour émettre la lumière ;
une première plaque de polarisation (130) configurée pour transmettre une première lumière polarisée de la lumière émise à partir de la plaque guide de lumière transparente ;
un écran à cristaux liquides (140) configuré pour modifier une phase de la première lumière polarisée en fonction de l'excitation des cristaux liquides ; et
une deuxième plaque de polarisation (150) configurée pour ajuster une quantité de la première lumière polarisée en fonction de la phase modifiée de la première lumière polarisée,
dans lequel la plaque guide de lumière transparente comprend :
une surface incidente (121) à laquelle la lumière est incidente ;
une surface de sortie (123) ;
une surface réfléchissante (124) qui est opposée à la surface de sortie ; et
une pluralité de micromotifs MP formés sur la surface réfléchissante, configurée pour diffuser la lumière incidente à travers la surface de sortie,
dans lequel la pluralité de micromotifs forme une pluralité de groupes de motifs et les groupes de la pluralité de groupes de motifs sont espacés à des intervalles réguliers,
**caractérisé en ce que** les groupes de motifs ont la forme de longues barres et **en ce que** l'espacement des groupes de motifs est tel que les groupes de motifs fonctionnent comme les ouvertures d'une barrière de parallaxe afin que l'appareil d'affichage affiche des images autostéréoscopiques.

2. Appareil d'affichage transparent selon la revendication 1,
dans lequel la pluralité de micromotifs est formée de manière uniforme ou discontinue sur la surface réfléchissante.

3. Appareil d'affichage transparent selon la revendication 1,
dans lequel la pluralité de micromotifs est formée de manière dense dans une zone centrale de la surface réfléchissante et formée de manière éparse dans des zones de la surface réfléchissante plus proches de la surface incidente.

4. Appareil d'affichage transparent selon la revendication 1,
dans lequel la pluralité de groupes de motifs est divisée en une pluralité de sous-groupes de motifs en fonction des distances à la surface incidente, et
dans lequel la pluralité de micromotifs est disposée à des intervalles différents en fonction des sous-groupes de motifs auxquels les micromotifs de la pluralité de micromotifs appartiennent.

5. Appareil d'affichage transparent selon la revendication 4,
dans lequel, si un sous-groupe de motifs auquel une partie de la pluralité de micromotifs appartient est situé à la plus longue distance à la surface incidente, la partie de la pluralité de micromotifs est disposée à des intervalles plus étroits ou elle a la plus grande largeur.

6. Appareil d'affichage transparent selon la revendication 1, la revendication 4 ou la revendication 5,
dans lequel la pluralité de groupes de motifs est inclinée à un angle prédéterminé par rapport à la surface incidente.

7. Appareil d'affichage transparent selon l'une quelconque des revendications précédentes, dans lequel la pluralité de micromotifs s'étend dans une direction dans laquelle la surface incidente s'étend et est formée par au moins un motif choisi parmi un motif à prisme triangulaire, un motif à prisme rond et un motif lenticulaire.

8. Afficheur transparent (100) comprenant :
une source de lumière (110) configurée pour générer de la lumière ;
une première plaque de polarisation (130b) configurée pour transmettre la première lumière polarisée de la lumière générée par la source de lumière ;
une plaque guide de lumière transparente (120) configurée pour modifier un trajet de la première lumière polarisée et pour émettre la lumière ;
un écran à cristaux liquides (140) configuré pour modifier une phase de la première lumière polarisée en fonction de l'excitation des cristaux liquides ; et
une deuxième plaque de polarisation (150) configurée pour ajuster une quantité de la première lumière polarisée en fonction de la phase modifiée de la première lumière polarisée,
dans lequel la plaque guide de lumière transparente comprend :
une surface incidente (121) à laquelle la lumière est incidente ;
une surface de sortie (123) ;
une surface réfléchissante (124) qui est opposée à la surface de sortie ; et
une pluralité de micromotifs formés sur la surface réfléchissante, configurée pour diffuser la lumière incidente à travers la surface de sortie,
dans lequel la pluralité de micromotifs forme une pluralité de groupes de motifs et les groupes de la pluralité de groupes de motifs sont espacés à des intervalles réguliers,
**caractérisé en ce que** les groupes de motifs ont la forme de longues barres et l'espacement des groupes de motifs est tel que les groupes de motifs fonctionnent comme les ouvertures d'une barrière de parallaxe afin que l'appareil d'affichage affiche des images autostéréoscopiques.

9. Appareil d'affichage transparent selon la revendication 8,
dans lequel la pluralité de micromotifs est formée de manière uniforme ou discontinue sur la surface réfléchissante.

10. Appareil d'affichage transparent selon la revendication 8,
dans lequel la pluralité de micromotifs est formée de manière dense dans une zone centrale de la surface réfléchissante et formée de manière éparse dans des zones de la surface réfléchissante plus proches de la surface incidente.

11. Appareil d'affichage transparent selon la revendication 8,
dans lequel la pluralité de groupes de motifs est formée de manière discontinue à des intervalles réguliers.

12. Appareil d'affichage transparent selon la revendication 11,
dans lequel la pluralité de groupes de motifs est divisée en une pluralité de sous-groupes de motifs en fonction des distances à la surface incidente, et
dans lequel, lorsqu'un sous-groupe de motifs auquel une partie de la pluralité de micromotifs appartient se situe à la plus longue distance à la surface incidente, la partie de la pluralité de micromotifs est disposée à des intervalles plus étroits ou elle a la plus grande largeur.

13. Appareil d'affichage transparent selon la revendication 11 ou la revendication 12,
dans lequel la pluralité de groupes de motifs est inclinée à un angle prédéterminé par rapport à la surface incidente.

14. Appareil d'affichage transparent selon l'une quelconque des revendications 8 à 13,
dans lequel la pluralité de micromotifs s'étend dans une direction dans laquelle la surface incidente s'étend, et
dans lequel la pluralité de micromotifs est formée par au moins un motif choisi parmi un motif à prisme triangulaire, un motif à prisme rond et un motif lenticulaire.
